# FASCICULE DE BREVET EUROPEEN

(11) **EP 3 879 974 B1**
(45) Date de publication et mention de la délivrance du brevet: **04.10.2023**
(21) Numéro de dépôt: 19827807.9
(22) Date de dépôt: 13.11.2019
(51) Int. Cl.: A01K 29/00, A01K 5/02, A01K 1/015

(54) **ENSEMBLE DE SURVEILLANCE ET D'INTERVENTION POUR LOCAUX D'ELEVAGE**
GERÄT ZUM ÜBERWACHEN UND EINGREIFEN IN EINEM VIEHZUCHT HAUS
MONITORING AND INTERVENTION APPARATUS FOR AN ANIMAL HUSBANDRY HOUSE

(30) Priorité: 13.11.2018 FR 1871549
(43) Date de publication de la demande: 22.09.2021
(73) Titulaire: Dussau Distribution, 40320 Pécorade (FR)
(72) Inventeur: DUSSAU, Christian, 40320 Samadet (FR)
(74) Mandataire: Argyma
(86) Numéro de dépôt international: PCT/IB2019/059759
(87) Numéro de publication internationale: WO 2020/100068

(56) Documents cités:
- EP-A1- 3 066 916
- WO-A1-2017/141155
- WO-A1-2018/015519
- WO-A2-2014/141313
- US-B2- 11 064 647

## Description

La présente invention est du domaine notamment des techniques et matériels utilisés dans le domaine de l'élevage, pour notamment surveiller les locaux d'élevage et les animaux y résidant.

En raison de l'augmentation de la taille des élevages et de la rareté du personnel pouvant accomplir les tâches d'entretien des locaux, de nettoyage de ces derniers, de nourrissage des animaux, de paillage etc..., les éleveurs optent pour l'utilisation de solutions visant à une automatisation poussée de ces tâches à l'aide de matériels dédiés. Ainsi, ont été mises en oeuvre par le passé diverses unités autonomes telles que des unités de formation de litière par paillage, des unités de nourrissage, des unités de nettoyage et autres. Ces différentes unités ont fait leurs preuves et sont maintenant d'un usage courant. Cependant, l'équipement complet d'un élevage avec ces différents matériels suppose un investissement conséquent hors de portée des petites et moyennes exploitations.

Certains matériels, comme c'est le cas notamment de certaines unités de distribution de nourriture et de produits de paillage, sont installés avec leur réserve de produit sur des rails suspendus à la charpente du local et, en pleine charge, sont d'un poids particulièrement élevé. Pour cette raison, des travaux de renfort de la charpente sont bien souvent nécessaires, ce qui se traduit par des surcoûts d'investissement, particulièrement significatifs.

Une des opérations particulièrement importantes, puisqu'elle accroît le bien-être de l'élevage, est le paillage. Une telle opération a été trop souvent négligée par le passé ce qui s'est traduit par des baisses de rendement dues au mauvais état sanitaire des litières. Il est maintenant admis que le soin apporté à la formation de la litière et à son parfait entretien augmentent de manière significative les rendements en réduisant le taux de mortalité et de morbidité de la population animale et le nombre d'animaux malades et par voie de conséquence la quantité de produits curatifs administrés aux animaux, tels qu'antibiotiques par exemple. Le danger d'une utilisation excessive des antibiotiques est connu et de récentes études montrent que l'accroissement de la résistance des bactéries pathogènes à ces substances sera responsable dans les années à venir, d'un taux de mortalité particulièrement élevé tant parmi les populations animales que parmi la population humaine en raison du franchissement de la barrière des espèces par certains agents. Ainsi une diminution de l'utilisation de ces produits curatifs est recherchée par les éleveurs tant pour diminuer les coûts que pour répondre aux exigences des consommateurs.
Dans la plupart des cas, l'épandage de la litière ne peut être effectué qu'en présence des animaux, en raison du fait que ces derniers ne peuvent être extraits du local d'élevage soit en raison de leur âge soit en raison de risques infectieux présents à l'extérieur. Dans cette situation, l'opération de paillage ne peut être effectuée de manière autonome par les matériels connus, mais doit être impérativement pilotée par l'éleveur pour éviter la projection de produits de litière sur les animaux pouvant à terme conduire à des irritations et infections des bronches, des yeux et des conduits auditifs tant par les poussières générées lors de cette opération que par les bactéries susceptibles d'être transportées par ces poussières.

Une litière nouvellement formée doit être entretenue régulièrement sous peine de voir le confort des animaux altéré. Cet entretien est effectué habituellement par ajout de produits de litière sur les régions les plus souillées ainsi que sur les régions les plus humides. Là encore ces travaux d'entretien qui consistent en un épandage local de produits de litière, bien souvent en présence des animaux, ne peuvent actuellement être effectués de manière autonome et discriminante par un matériel dédié et doivent être pilotés et contrôlés par l'éleveur. De telles opérations sont particulièrement chronophages et pour cette raison le paillage d'appoint est soit négligé ou alors effectué par des robots de paillage sur l'ensemble du bâtiment ou sur certaines zones prédéfinies de ce dernier et ce sans possibilité de discrimination entre les zones saines et les zones souillées ou humides. Ainsi des zones saines se retrouvent recouvertes de produits de litière alors qu'elles n'en ont nul besoin ce qui génère des pertes financières. A contrario, des zones souillées ou humides peuvent être insuffisamment recouvertes. Il résulte de cette situation la permanence de zones humides qui sont bien souvent la cause de l'apparition de pododermatites.

L'entretien d'une litière dans un état sanitaire satisfaisant consiste également en des opérations d'aération à l'aide d'engins de scarification. De tels engins manoeuvrés par l'éleveur ont pour but de brasser la litière afin de l'aérer et diminuer ainsi notamment les risques de dégagement d'ammoniaque. Cependant ce brassage conduit bien souvent à ramener en surface des agents pathogènes responsables de diverses affections telles que par exemple les pododermatites. Pour cette raison, cette opération d'aération devrait s'accompagner d'une opération d'assainissement de litière. Or, cette dernière opération est très peu pratiquée par insuffisance de moyens ou par manque de temps de sorte que des agents pathogènes se trouvent propagés dans l'ensemble du local. On connait un appareil scarificateur, apte à évoluer de manière autonome dans le local d'élevage sur le sol, parmi les animaux et à assurer, conjointement au brassage de la litière, l'assainissement de cette dernière par projection d'un produit désinfectant. Pour pouvoir évoluer dans le local d'élevage sans risque pour les animaux, cet engin est équipé de caméra et embarque des moyens électroniques d'analyse d'images et d'intelligence artificielle dont la présence peu rendre délicate la désinfection complète de l'engin. En outre, en raison des conditions d'ambiance dans les locaux d'élevage, les équipements de guidage de l'appareil doivent être protégés voire même renforcés, ce qui renchérit le coût de l'appareil. Enfin ce genre d'appareil ne peut se déplacer qu'à très faible vitesse et de surcroît uniquement en période diurne s'il n'est pas souhaitable de déranger des animaux endormis, sachant qu'un réveil anticipé est source de stress. Ainsi ses applications se trouvent limitées et ne peuvent être étendues à la surveillance permanente du local et des animaux. De plus en raison de la position au sol de cet appareil, il est difficile d'obtenir une image d'ensemble du local et une image rapprochée des éléments de ce dernier.

Une opération de formation de litière intervient systématiquement après des opérations de nettoyage complet et de désinfection des locaux d'élevage. On conçoit donc que cette opération de formation de litière peut dégrader l'état sanitaire du local si la paille n'est pas désinfectée avant épandage. L'état sanitaire du bâtiment peut également être dégradé par les matériels utilisés pour l'opération de paillage. En effet certains matériels comme les engins tracteurs sont utilisés à l'extérieur du bâtiment et peuvent y introduire des agents pathogènes lorsqu'ils y pénètrent.

Dans l'optique de l'amélioration du bien-être animal, la castration des porcs, l'épointage des becs des volailles, l'ablation des griffes de leurs pattes et autres altérations physiques des animaux d'élevage sont en cours d'interdiction dans plusieurs pays. De telles mesures conjuguées à la promiscuité des animaux ont cependant des effets négatifs, car elles sont de nature à maintenir les animaux dans un état d'agressivité élevé envers leurs congénères. La seule manière de diminuer l'agressivité des animaux est de les distraire. Il a été observé que l'ajout de litière présente un effet ludique apte à atténuer leur agressivité. De même, la distribution de nourriture sur une litière fraîchement renouvelée conduit aux mêmes effets. Cependant, en raison de l'insuffisance des moyens mis à la disposition des éleveurs, cette technique est très peu utilisée.

Les équipements dont sont dotés les locaux d'élevage sont habituellement spécifiques à une opération particulière.

Ainsi on connaît de la demande de brevet EP 3066916 un chariot suspendu pour étables comportant un conteneur formant une réserve de produit de litière à distribuer et un système de distribution pour distribuer la litière à un emplacement de distribution, le chariot suspendu comprenant en outre un système de détection apte à détecter la présence d'un animal dans l'emplacement de distribution, et si une présence est détectée, interdire la distribution de litière.

On connaît également de la demande de brevet WO2017/141155 un système d'inspection et de surveillance destiné à des activités zootechniques d'élevage.
Le système comprend des moyens de transport déplaçables le long d'un trajet attenant à un espace d'élevage avicole formé de cages en batteries et un ensemble de capteurs et caméra monté sur le moyen de transport. Selon une première forme de réalisation le moyen de transport est monté sur un châssis mobile sur la batterie de cages, ce châssis portant des trémies de distribution d'aliments. Selon une seconde forme de réalisation, le moyen de transport est formé par un engin automobile mobile sur le sol le long des batteries.

Les deux chariot et système objets des deux documents précités présentent l'inconvénient lié au transport des contenants des produits à distribuer. En raison du poids à supporter, les structures supports telles que rails de guidage et éventuellement, les suspentes de ces rails à l'ossature du bâtiment doivent présenter des sections relativement importantes pour résister aux sollicitations mécaniques. En outre de tels système et chariot ne peuvent accomplir de par leur conception, d'autres tâches que la distribution de produit de litière ou la surveillance du local.

### Exposé de l'invention.

La présente invention a pour objet d'apporter une solution aux problèmes sus évoqués.

À cet effet un ensemble de surveillance et d'intervention pour local d'élevage est proposé, cet ensemble comprenant :
- une unité de surveillance mobile dotée de moyens de surveillance du local d'élevage et des animaux y résidant, les coordonnées géographiques de ladite unité dans le local étant déterminables par rapport à une origine,
- au moins un module d'intervention, mobile, apte à être entraîné et piloté par ladite unité de surveillance, ledit module d'intervention, au repos étant installé sur une aire de stockage,
- ladite unité de surveillance et ledit module d'intervention comportant tous deux des moyens mécaniques d'attelage, coopérants, de liaison l'un à l'autre, verrouillables déverrouillables et,
- ladite unité de surveillance étant apte à surveiller en permanence le local et les animaux, sans pour autant recevoir en attelage le ou l'un des modules d'intervention.

On comprend que l'ensemble de surveillance et d'intervention n'est pas spécifique à une tâche particulière, mais qu'au contraire il peut accomplir divers travaux notamment ceux entrant dans le cadre des activités propres à l'élevage.
De plus on comprend que le ou chaque module d'intervention n'a nul besoin d'être équipé de moyens d'autonomie ni de motricité, l'autonomie énergétique et/ou la motricité lui étant dispensées par l'unité de surveillance. Une telle disposition réduit de manière drastique le coût de chaque module et l'investissement total. Ainsi, un équipement doté de tous les modules nécessaires à la bonne gestion d'un élevage devient maintenant accessible aux exploitations de toutes tailles même les plus modestes.

En outre, ces dispositions conduisent à un allègement important de l'unité de surveillance, la masse de cette dernière étant inférieure à 50 kg. Une conséquence de cet allègement est une moindre consommation énergétique. Une autre conséquence de cet allègement de masse, est une plus grande facilité de déplacement de l'unité de surveillance. Une autre conséquence de cet allègement de masse est la possibilité d'un déplacement plus rapide de l'unité de surveillance.

Selon une autre caractéristique de l'invention, l'unité de surveillance comporte un moyen d'entraînement le long d'un trajet.

Une telle disposition confère à l'unité de surveillance un caractère automobile, la source d'énergie que nécessite le fonctionnement du moyen d'entraînement pouvant être embarquée ou située à distance.
Une source d'énergie embarquée pourra être constituée par une ou des batteries. Une source d'énergie à distance sera connectée au moyen d'entraînement par des liaisons adaptées, ces liaisons pourront être constituées par des conducteurs électriques s'agissant d'une source d'énergie électrique ou par des conduites de transport de fluide (huile ou air) s'agissant d'une source d'énergie pneumatique ou hydraulique.

Alternativement, selon une autre caractéristique de l'invention, l'unité de surveillance ne comporte pas de moyen d'entraînement et est prévue pour être tractée sur un trajet par un chariot motorisé. Ce chariot et l'unité de surveillance seront fixés l'un à l'autre de manière démontable par exemple par boulons, ou de manière indémontable ou bien encore par des organes d'attelage rapide par exemple du type verrouillable-déverrouillable. Ces organes pourront être actionnés en verrouillage et déverouillage soit manuellement soit par un ou plusieurs actionneurs pilotés et commandés à distance par l'unité de surveillance ou par l'unité de contrôle et de traitement.

Selon une variante d'exécution, l'unité de surveillance est tractée par un câble formant une boucle sans fin, tendue entre une poulie menée et une poulie menante accouplée à un organe moteur d'entraînement en rotation.

Selon une autre caractéristique de l'invention, l'ensemble de surveillance est équipé d'une unité de traitement et de commande, d'analyse et de diagnostic en relation de communication avec l'unité de surveillance, ladite unité de traitement étant apte à analyser les données et signaux émis par au moins les moyens de surveillance que comporte l'unité de surveillance, à analyser ces signaux, à établir un diagnostic et le cas échéant commander et piloter l'unité de surveillance pour piloter une intervention. Une telle unité de traitement sera constituée par exemple par au moins un micro-ordinateur ou équivalent équipé de logiciels d'intelligence artificielle.

L'unité de traitement, selon une caractéristique additionnelle de l'invention, est portée par l'unité de surveillance, mais, alternativement, selon une autre caractéristique de l'invention, ladite unité de surveillance est installée dans un poste distant. Selon cette caractéristique des moyens de communication hertziens ou filaires, connus en soi, sont installés entre ladite unité de surveillance et l'unité de traitement. De même, cette unité de traitement peut être installée pour partie sur l'unité de surveillance et pour autre partie dans un poste distant. De par cette disposition de déport, plusieurs unités de surveillance installées dans différents locaux d'élevage, pourront être associées à une même unité de traitement ou à sa partie déportée.

Selon une autre caractéristique de l'invention, l'unité de surveillance comprend au moins une caméra de surveillance apte à donner des images du local et des animaux y résidant, l'unité de traitement comportant des moyens d'analyse d'images. Ces moyens d'analyse d'images seront pour l'essentiel constitués par des logiciels adaptés d'intelligence artificielle dont est équipée l'unité de traitement.

Selon une caractéristique additionnelle, l'unité de surveillance de l'ensemble de surveillance est équipée d'une caméra vidéo de surveillance du type thermique et/ou d'une caméra dite 3D et/ou d'une caméra téra-hertz et/ou d'une caméra infrarouge.
L'intérêt des caméras thermiques est leur aptitude à produire des images laissant apparaître les différents rayonnements infrarouges des corps. Grâce à ces dispositions de surveillance, il devient possible de surveiller le local, l'équipement de ce dernier, l'état de la litière ainsi que les animaux, leur température et leur comportement afin de détecter toutes anomalies justifiant une intervention ou une alerte. De tels moyens d'analyse d'image sont constitués pour l'essentiel par des logiciels d'intelligence artificielle.

Selon une autre caractéristique de l'invention, l'unité de surveillance comporte au moins un capteur de mesure du taux d'ammoniaque et/ou d'un capteur de mesure du taux de gaz carbonique et/ou d'un capteur de mesure du taux d'oxygène et/ou un capteur de mesure de température et/ou d'un capteur de mesure du taux d'hygrométrie et/ou un fluxmètre et/ou un anémomètre et/ou un capteur du type boule noire et/ou un microphone et/ou un capteur d'infrasons et/ou un capteur de poussières et autres particules. Les données délivrées par ces différents capteurs seront traitées par l'unité de traitement et de commande avec l'aide éventuellement des logiciels d'intelligence artificielle dont est équipée l'unité de traitement.

Les anomalies susceptibles d'être détectées par l'ensemble de surveillance grâce aux moyens de surveillance transportés par l'unité de surveillance peuvent être de tous ordres. Elles peuvent concerner l'équipement et l'ambiance du local d'élevage, ou bien le troupeau dans son ensemble, un groupe d'individus de ce troupeau ou bien l'un des individus de ce troupeau.

Ces anomalies, selon une caractéristique additionnelle de l'invention, seront signalées à l'éleveur via des moyens de communication, connus en soi, par exemple, des moyens hertziens, comprenant au moins un émetteur porté par l'unité de surveillance et au moins un récepteur distant installé chez l'éleveur ou porté par ce dernier. À titre purement indicatif, ces moyens de communication pourront être constitués par un émetteur GSM (Global System For Mobile Communications) et par le téléphone portable de l'éleveur. Ces moyens de communication peuvent être filaires pour réduire le taux d'exposition des animaux aux ondes électromagnétiques hertziennes.

Après analyse de ces anomalies par l'unité de traitement avec l'aide éventuellement des logiciels d'intelligence artificielle dont elle est équipée, l'ensemble de surveillance et d'intervention pourra déclencher de manière autonome toutes interventions visant à les réduire ou les supprimer. Ainsi, selon une autre caractéristique de l'invention, après diagnostic de l'anomalie, l'unité de traitement, de commande et de diagnostic commande le déplacement de l'unité de surveillance vers une région de stockage du module de traitement correspondant, commande l'attelage dudit module à ladite unité, commande le déplacement de ladite unité de surveillance et du module vers le lieu d'intervention, et commande et pilote l'intervention.

Les anomalies matérielles peuvent par exemple être des fuites d'eau dues à la rupture d'une conduite, des points anormaux de chaleur dont la température est anormalement basse ou à l'inverse, anormalement haute, représentative par exemple de la défectuosité d'un appareil de chauffage ou bien d'un début d'incendie. De telles anomalies de température seront détectées à l'aide de la ou de chaque caméra thermique équipant l'unité de surveillance, et/ou par des capteurs de température et des logiciels d'intelligence artificielle équipant l'unité de traitement. D'autres anomalies pourront être détectées par les capteurs d'humidité, de gaz carbonique, d'ammoniaque et autres. Dans la mesure où l'unité de traitement et de commande est en relation de communication et de pilotage avec les équipements du local d'élevage, elle pourra agir après détection d'une fuite sur les vannes d'alimentation en eau et fermer cette alimentation. De même s'agissant, d'un excès d'humidité sous les rampes d'abreuvement, l'unité de traitement pourra agir sur la pression d'eau d'alimentation de ces rampes ainsi que sur les organes d'ajustement de leur hauteur par rapport au sol. S'agissant d'une température anormale dans le local, l'unité de traitement et de commande pourra agir sur les éléments de ventilation du local et sur les appareils de chauffage. Un début d'incendie pourra être détecté par la ou chaque caméra thermique mais aussi par les capteurs de gaz équipant tant le local que l'unité de surveillance. Dans ces conditions, l'unité de surveillance générera une alerte à destination des services de secours, cette alerte pouvant prendre la forme d'un message vocal avec indication du lieu de l'incendie. Cet incendie ou ce début d'incendie sera combattu par les moyens autonomes de lutte contre l'incendie dont est équipé le local d'élevage, typiquement ces moyens autonomes étant formés par des conduites d'eau et par des gicleurs bouchés par des ampoules aptes à casser en cas de forte élévation de température.

Pour appuyer les moyens de lutte contre l'incendie dont est équipé le local d'élevage, l'ensemble de surveillance selon une autre caractéristique de l'invention est équipé d'un moyen de lutte contre l'incendie. Ce moyen de lutte contre l'incendie, selon caractéristique additionnelle de l'invention, est constitué par un moyen d'extinction porté par l'unité de surveillance et commandé par cette dernière. Alternativement, selon une autre caractéristique de l'invention, est prévu un module de lutte contre l'incendie comprenant une lance, qui peut être télescopique, connectée à un tuyau d'amenée d'un produit extincteur, ledit tuyau étant connecté à un serveur distant, externe au local d'élevage, ledit serveur étant pourvu d'une réserve de produits extincteurs. Le produit extincteur pourra être constitué par de l'eau, par de la mousse ou par un matériau particulaire incombustible transporté par un fluide sous pression. Le matériau particulaire pourra être constitué par du sable tandis que fluide sous pression pourra être de l'air ou alors un gaz non comburant. Le fluide sous pression pourra aussi être constitué par un liquide incombustible par exemple de l'eau.

La lance du module de lutte contre l'incendie pourra être télescopique et montée par sa zone proximale en porte à faux sur une tourelle du module afin d'être orientable en azimut et élévation. Ainsi à partir d'une même position du module différents points du bâtiment pourront être atteints par la lance.

Selon une caractéristique additionnelle, la lance à son extrémité distale comporte un clapet de fermeture manoeuvrable par un organe moteur porté par le tronçon distal et prévu pour être commandé par l'unité de traitement et aux deux tronçons distal et proximal de la lance est fixé un moyen mécanique de rétraction commandé et piloté par l'unité de traitement, forçant la rétraction de la lance lorsqu'il est activé.

Par fermeture du clapet et introduction d'un fluide sous pression dans la lance est obtenu le déploiement de cette dernière, le degré de déploiement de la lance étant contrôlé par l'unité de traitement par action sur le moyen mécanique de rétraction. Ensuite, le clapet peut être ouvert par action de l'organe moteur correspondant pour délivrer le fluide extincteur.

Selon une autre caractéristique de l'invention, le moyen mécanique de rétraction est formé d'un câble de traction fixé par son extrémité libre au tronçon distal de lance et d'un enrouleur de câble fixé au tronçon proximal, ledit enrouleur de câble comportant un tambour d'enroulement sur lequel s'enroule le câble, un organe moteur accouplé au tambour d'enroulement, et un codeur accouplé au tambour ou au moteur, ce codeur pouvant être du type incrémental ou analogique ou autre. Ce codeur est apte à délivrer une information sous forme de signaux relative au degré de déroulement ou d'enroulement du câble et par voie de conséquence au degré de déploiement ou de rétraction de la lance. La rétraction de la lance peut être obtenue aussi en soumettant son volume interne à une dépression.

Le module d'appui de lutte contre l'incendie tel que décrit peut avantageusement être utilisé à d'autres fins, ce qui lui confère un fort degré de polyvalence. Ainsi, l'extrémité distale de la lance, selon une caractéristique additionnelle de l'invention, sera équipée d'un capteur de température pour mesurer la température d'un point particulier du local ou de la litière, les signaux délivrés par ce capteur de température seront délivrés à l'unité traitement. On pourra également mesurer par ce biais la température corporelle externe des animaux en amenant le capteur de température soit à proximité soit au contact de la peau de ces derniers. En variante, le capteur de température sera apte à mesurer la température de chaque animal à distance. De même des capteurs de mesures non invasives de paramètres physiologiques des animaux pourront être installés en extrémité libre de la lance.

L'extrémité distale de la lance de ce module ou d'un module du même type, selon une autre caractéristique de l'invention, sera équipée d'un organe de nettoyage par exemple une buse de nettoyage. Ainsi par analyse des images données par l'une au moins des caméras vidéo dont est équipée l'unité de surveillance, il sera possible de nettoyer les zones souillées du local et seulement ces zones. Seront ainsi réalisées des économies substantielles de produits de nettoyage. Ces produits de nettoyage pourront être de l'eau ou des solutions aqueuses avec désinfectant. De même ils pourront être constitués par des gaz désinfectants adaptés.

La lance pourra être dotée en extrémité d'une caméra dont les signaux seront traités par l'unité de traitement. De cette manière la précision du nettoyage s'en trouvera accrue.

Selon encore une autre caractéristique de l'invention, l'extrémité de la lance sera équipée d'au moins un capteur du taux d'ammoniaque et/ou d'un capteur du taux de gaz carbonique et/ou d'un capteur du taux d'oxygène et/ou d'un capteur de température et/ou d'un capteur d'hygrométrie et/ou d'un luxmètre et/ou d'un anémomètre et/ou d'un capteur du type boule noire et/ou d'un microphone et/ou d'un capteur de poussières. Alternativement, selon une autre caractéristique de l'invention, l'extrémité proximale de la lance est connectée à un bipasse, porté par l'unité de surveillance et commandé par l'unité de traitement, une des voies du bipasse est connectée au serveur de produits extincteurs et l'autre voie est connectée à une pompe à vide en relation de communication avec un analyseur de gaz porté par l'unité de surveillance. Par action sur le bipasse, le volume interne de la lance sera connecté à la pompe à vide et par ouverture du clapet d'extrémité et activation de la pompe de l'air de l'air sera aspiré dans la lance pour ensuite être refoulé vers l'analyseur et analysé.

Les anomalies comportementales des animaux peuvent concerner l'ensemble du troupeau ou seulement quelques animaux ou bien encore un individu et seront détectées par analyse, à l'aide des logiciels d'intelligence artificielle, des mouvements du ou des animaux concernés à partir des images données par la ou chaque caméra. Un état de nervosité d'une femelle pourra signaler une période de chaleur et pour une femelle gravide pourra signaler un début de parturition. Un regroupement des animaux pourra être significatif d'une température trop basse tandis qu'une répartition des animaux le long des murs du local pourra être significative d'une température trop élevée dans le local. De même une démarche erratique telle qu'une claudication sera significative de blessures aux pattes. Un attroupement pourra être le signe de la présence d'un intrus dans le local d'élevage par exemple un prédateur. Il pourra aussi être le signe d'une présence humaine intrusive autre que l'éleveur.

Ces différents types d'anomalies sont bien connus de l'éleveur et seront répertoriées dans une base de données propre à l'unité de traitement. Une bête malade pourra être aisément identifiée par l'unité de traitement grâce aux étiquettes d'identification dont cet animal est doté ou sera doté, mais aussi par reconnaissance faciale ou plus généralement par reconnaissance corporelle. S'agissant de volailles, la reconnaissance sera effectuée par des colliers portés par les animaux. L'identification de l'animal pourra être effectuée par lecture à partir des images produites par l'une des caméras, des codes d'identification inscrits sur les étiquettes ou par lecture, par un lecteur RFID, d'une puce RFID portée par l'une des étiquettes passives ou actives d'identification de l'animal. La reconnaissance faciale de l'animal et plus généralement de tous les animaux pourra être effectuée par l'unité de traitement par les logiciels d'intelligence artificielle à partir des images produites par la ou chaque caméra vidéo.

Par l'analyse de ces images à l'aide de logiciel d'intelligence artificielle, il sera également possible d'estimer la masse corporelle de chaque animal identifié et de suivre l'évolution de son engraissement. Ainsi, un taux d'engraissement trop faible à l'issue d'une période déterminée pourra être représentatif d'un mauvais état de santé ou d'un problème d'alimentation. De même un taux d'engraissement trop élevé devra conduire à une réduction de l'alimentation.

Il est également possible à l'aide de la caméra et de l'analyse par des logiciels d'intelligence artificielle, des images vidéo données par cette caméra, de rechercher les animaux morts en vue de les transporter vers un moyen d'évacuation. Une telle fonction de recherche sera améliorée par usage d'une caméra thermique ou autre caméra adaptée. Dans le but de transporter les animaux morts, selon une caractéristique additionnelle, l'ensemble de surveillance est équipé d'un module terrestre, automobile, apte à évoluer sur le sol du local ce dit module étant piloté à distance, par voie hertzienne par l'unité de surveillance, et ce dit module télécommandé comprenant des pinces de préhension des animaux morts. On pourra également avec une telle unité ramasser les animaux malades et les transporter vers une unité de soins.
Alternativement, ledit module est équipé d'un tapis sans fin pour le ramassage des animaux morts ou malade.

Selon une autre caractéristique de l'invention, l'un des modules est prévu pour épandre des produits de paillage et autres produits tels que nourritures et est doté d'un moyen d'épandage, par exemple un canon d'épandage, alimenté via un circuit pneumatique ou mécanique de transport de produits par un serveur distant prévu pour être disposé à l'extérieur du local d'élevage, ledit canon étant orientable tant en azimut qu'en élévation, l'orientation du canon étant pilotée par l'unité de traitement à partir des signaux délivrés par la ou les caméras et analysés par des logiciels d'intelligence artificielles adaptés. À l'aide de la caméra thermique portée par l'unité de surveillance, l'unité traitement sera apte à détecter les zones souillées ou plus froides de la litière dues par exemple à un taux d'humidité important, ces zones froides ou humides ou souillées se situant généralement, mais non limitativement sous les abreuvoirs et au niveau des accès vers l'extérieur du local tel que portes et trappes. Il sera alors possible par la commande et le pilotage du canon d'épandage de recouvrir ces zones et uniquement ces zones en produits de litière ou en produits propres à absorber l'humidité. Est réalisée ainsi une économie en produit de litière.

Il y a lieu de noter que la détection des zones souillées pourra être réalisée par une caméra vidéo fonctionnant dans le spectre visible.

Selon une autre caractéristique de l'invention, le canon d'épandage du module d'épandage porte une caméra thermique prévue pour être couplée à l'unité de surveillance via des organes de connexion électriques coopérants, portés par ledit module de projection et par ladite unité de surveillance, l'axe optique de la caméra optique étant parallèle à l'axe du canon. Par ce biais le recouvrement des zones humides sera effectué avec plus de précision.

Selon une autre caractéristique de l'invention, la bouche de sortie du canon d'épandage est dotée d'un déflecteur articulé, réglable, associé à un organe moteur de commande piloté par l'unité de traitement.

Selon une autre caractéristique de l'invention, le canon d'épandage est vertical.

Selon une autre caractéristique de l'invention, le canon d'épandage est en relation de communication avec un moyen de dépoussiérage. Ainsi, le taux de poussière pouvant être produit lors de la formation de la litière se trouve significativement abaissé. On réduit ainsi les risques d'infection par des agents pathogènes transportés par les poussières et les risques d'irritation des voies respiratoires des animaux.

Selon une autre caractéristique de l'invention, le moyen de dépoussiérage comprend un cyclone.

Selon une autre caractéristique de l'invention, l'unité de surveillance est suspendue par des roulettes à au moins un rail de guidage horizontal le long duquel elle peut être déplacée et comporte au moins une roue d'entraînement, en pression contre le rail, actionnée par un organe moteur porté par le bâti de l'unité de surveillance, ladite unité de surveillance comportant de plus un moyen de contrôle de sa position le long du rail par rapport à une référence ou origine.

Le rail de guidage est installé au-dessus du sol et est porté par l'ossature de toiture du bâtiment ou par des éléments portés par cette dernière. Grâce à cette disposition, l'unité de surveillance évolue au-dessus du sol et au-dessus des animaux et des obstacles posés au sol. Ainsi, l'unité de surveillance peut être déplacée d'un point à l'autre du rail selon une vitesse élevée.

Selon une autre caractéristique de l'invention, l'organe d'attelage que comporte l'unité de surveillance est formé d'une perche creuse télescopique actionnée en déploiement ou en rétraction par un mécanisme interne à vis et écrou doté d'un organe moteur d'entraînement de la vis, le tronçon inférieur de la perche comportant en extrémité inférieure, un cône de centrage et des griffes motorisées d'attelage, et le ou chaque dit module comporte une perche verticale dotée en extrémité supérieure d'un cône mâle de centrage et de forme en creux d'attelage prévues pour recevoir les griffes d'attelage.
Selon cette disposition le ou chaque module d'intervention est prévu pour reposer sur le sol ou dans un berceau porté par le sol dans un emplacement prédéterminé du local d'élevage.

Selon une autre caractéristique de l'invention, l'unité de surveillance comporte des jauges de contrainte installées entre son bâti et la perche verticale. Cette disposition combinée à l'usage d'un module approprié permet le pesage d'un animal. Ce module selon une caractéristique additionnelle de l'invention sera doté d'un plateau horizontal rigide, de pesage portant en son centre des organes d'attelage à la perche télescopique de l'unité de surveillance. En vue du pesage, l'animal à peser sera incité à monter sur ce plateau par divers moyens et procédures. À cet effet des aliments ou de l'eau pourront être distribués sur le plateau ou des objets présentant un aspect ludique pour l'animal.

Selon une autre variante de l'invention, le module de pesage est constitué par un plateau de pesage doté d'anses rigides portant des organes d'attelage à la perche de l'unité de surveillance. L'animal à peser sera incité à rejoindre le panier de pesage.

Selon encore une autre forme de réalisation, le module de pesage est agencé en nacelle compartimentée et est prévu pour le pesage des animaux morts et des animaux blessés. Cette nacelle comporte un plateau constituant son plancher et des anses rigides portant en extrémité supérieure les organes d'attelage tels que précédemment décrits.

Selon une autre variante d'exécution, le rail de guidage est prolongé via un aiguillage par une zone de stockage du ou de chaque module d'intervention ledit ou chaque module d'intervention est suspendu au dessus du sol par des roulettes, selon sa position, soit à la zone de stockage soit rail de guidage et les organes d'attelage sont constitués d'une part d'un crochet basculant articulé à l'unité de surveillance et associé à un organe moteur de manoeuvre porté par l'unité de surveillance et piloté par l'unité traitement et d'autre part d'un anneau d'attelage porté par le module d'intervention et prévu pour recevoir en emboîtement de forme le crochet d'attelage.

Avantageusement, selon une autre caractéristique de l'invention, le plateau de chaque module de pesage reçoit en fixation sur sa face inférieure au moins un capteur de température, au moins un capteur d'hygrométrie et au moins un capteur d'analyse de composition chimique des gaz, au moins un capteur de mesure de l'épaisseur de la litière. Il devient possible par ces moyens de mesurer par contact la température de la litière et son degré d'hygrométrie ainsi que la composition chimique des éventuels dégagements gazeux. Pour ce faire, la perche de l'unité de surveillance sera déployée afin d'amener ces capteurs au contact de la litière à très faible distance de cette dernière ou en profondeur dans ladite litière.

Avantageusement, s'agissant d'élevage de poules pondeuses, l'ensemble de surveillance et d'intervention, selon une caractéristique additionnelle, est équipé d'un module terrestre télécommandé de ramassage des oeufs pondus au sol. Selon une forme pratique de réalisation, ce module comprend deux bras de rabattage formant un Vé en zone avant et une plateforme de réception des oeufs formée entre les bras.

Avantageusement, selon une autre caractéristique de l'invention, la partie avant de chaque bras est formée par un rouleau horizontal.

### Bref exposé des figures et des dessins.

D'autres avantages, buts et caractéristiques de la présente invention, apparaîtront à la lecture de la description d'au moins une forme préférée de réalisation, donnée à titre d'exemple non limitatif en se référant aux dessins annexés en lesquels :
- la figure 1 est une vue de face d'un ensemble selon l'invention,
- la figure 1a est une vue de détail de la figure 1,

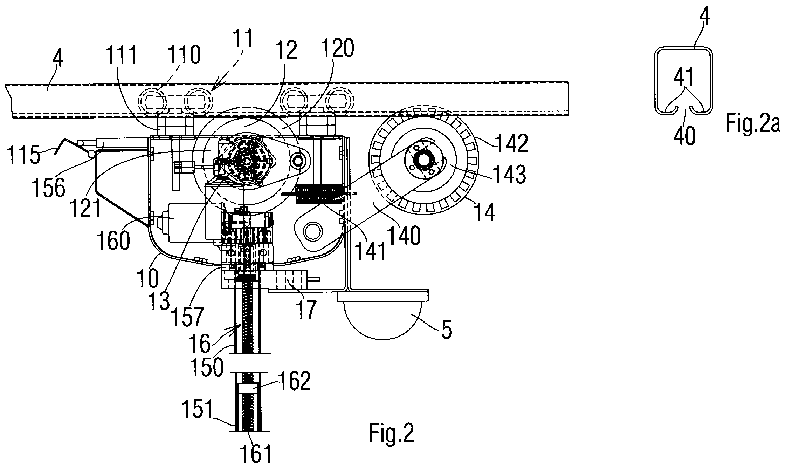

- la figure 2 est une vue en coupe de détail de l'unité de surveillance,
- la figure 2a est une de profil du rail de guidage,
- la figure 3 est vue agrandie d'un canon d'épandage,
- la figure 4 est une vue d'une seconde forme de réalisation d'un ensemble selon l'invention,
- la figure 5 est une vue schématique des moyens d'attelage selon une première forme de réalisation,
- la figure 6 est une vue schématique d'un aiguillage,
- les figures 7 à 10 montrent des modules de pesage selon diverses formes de réalisation,
- la figure 11 montre un canon d'épandage associé à un moyen dépoussiéreur,
- les figures 12 et 13 montrent un module d'épandage,
- la figure 14 montre un module de transport de personne,
- la figure 15 montre un module de brossage,
- la figure 16 montre un module télécommandé de préhension des animaux morts,
- la figure 17 montre un module de ramassage des oeufs,
- la figure 18 montre un module d'épandage et de distribution pour l'alimentation des nourrisseurs,
- la figure 19 montre un module de manoeuvre et de manipulation,
- la figure 20 est une vue d'une perche télescopique avec grappin,
- la figure 21 est une vue d'un outil pour le ramassage des oeufs, prévu pour être portée par la perche selon la figure 20,
- la figure 22 est une vue d'une caméra prévue pour être portée par la perche selon la figure 20,
- la figure 23 est une vue montrant des capteurs avec support commun prévus pour être portés par la perche selon la figure 20,
- la figure 24 montre un dispositif de manoeuvre de ridelles de mangeoires prévu pour être porté par la perche selon la figure 20,
- la figure 25 est une vue d'un appareil vétérinaire portant des sondes d'exploration, prévu pour être porté par la perche selon la figure 20,
- la figure 26 montre une perche selon la figure 8 accouplée à un boîtier de manoeuvre porté par un dispositif d'entraînement.
- la figure 27 montre un module télécommandé selon une autre forme de réalisation,
- la figure 28 montre une cage de ramassage des animaux blessés installée sur un module télécommandé selon la figure 27,
- la figure 28a montre une cage de ramassage des animaux morts installée sur un module télécommandé selon la figure 27
- la figure 29 représente en coupe une distributrice de litière prévue pour être portée par un module télécommandé selon la figure 27,
- la figure 30 montre un dispositif scarificateur prévu pour être porté par le module télécommandé selon la figure 27,
- la figure 31 montre un dispositif de carottage installé sur un module télécommandé selon la figure 27,
- la figure 32 est une vue d'un dispositif 68 apte à rassembler sur le lieu de consommation l'ensilage éparpillé par les animaux.

### Description d'un mode de réalisation de l'invention

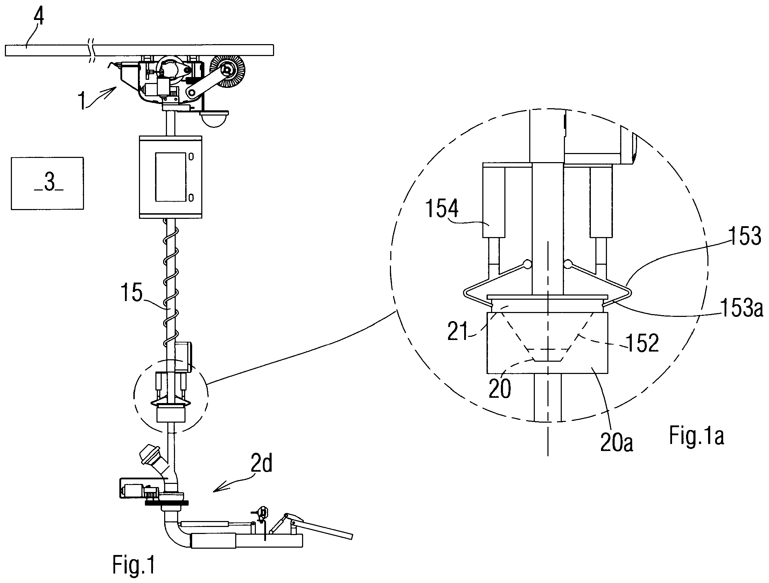

On observe en figure 1 un ensemble de surveillance et d'intervention pour local d'élevage comprend :
- une unité de surveillance 1 mobile dotée de moyens de surveillance du local d'élevage et des animaux y résidant, les coordonnées géographiques de ladite unité dans le local étant déterminables par rapport à une origine,
- au moins un module 2a, 2b, 2c, 2d, 2e, 2f, 2g, 2h d'intervention, mobile, apte à être entraîné et piloté par ladite unité de surveillance 1, ledit module d'intervention, au repos étant installé sur une aire de stockage,
- ladite unité de surveillance 1 et ledit module d'intervention comportant tous deux des moyens mécaniques, coopérants, d'attelage l'un à l'autre verrouillables déverrouillables et ladite unité de surveillance 1 étant apte à surveiller en permanence le local et les animaux, sans pour autant recevoir en attelage le ou l'un des modules d'intervention.

Par moyens mécaniques coopérants verrouillables déverrouillables on entend tous moyens aptes établir par coopération les uns avec les autres, une liaison mécanique prévue pour être non permanente, les dits moyens mécaniques étant aptes à coopérer les uns avec les autres de façon à pouvoir à la commande être assemblés les uns des autres pour établir une liaison mécanique, et alternativement être séparés les uns des autres afin d'interrompre la liaison, laquelle peut être du type par obstacle, par adhérence, par champ magnétique et autre.

Additionnellement, l'ensemble de surveillance selon l'invention comporte une unité 3 de traitement, en relation de communication avec l'unité de surveillance 1, ladite unité de traitement 3 étant apte à recevoir des données et signaux émis par au moins les moyens de surveillance que comporte l'unité de surveillance 1, à analyser ces données et signaux, à établir un diagnostic et le cas échéant à commander et contrôler l'unité de surveillance 1 pour piloter une intervention. Cette unité de traitement 3 est avantageusement constituée d'un ou plusieurs micro-ordinateurs ou équivalents et de logiciels d'intelligence artificielle pour l'analyse des données et signaux, l'établissement de diagnostics et le pilotage des éventuelles interventions. Les signaux que peut recevoir l'unité de traitement 3 peuvent être du type vidéo, audio et autres.

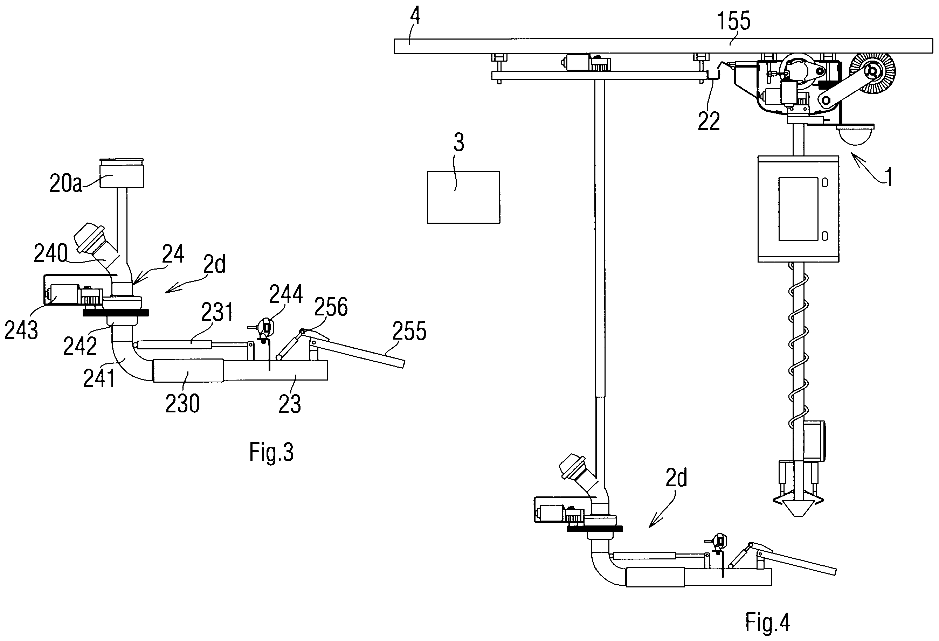

Dans l'exemple de réalisation objet notamment des figures 1 et 4, l'unité de surveillance 1 est suspendue à un rail de guidage 4 installé au-dessus du sol à distance de ce dernier, de manière horizontale ou inclinée, mais, en variante, cette unité de surveillance 1 sera conçue apte à pouvoir se déplacer sur le sol du local d'élevage et comportera alors des organes de roulement dont tous ou certains seront motorisés et dont tous ou certains seront directeurs.

L'unité de surveillance 1 est de préférence alimentée en énergie électrique par un jeu de batteries embarqué, mais elle pourra recevoir cette énergie en partie ou en totalité d'une source d'énergie déportée. Dans ce cas, l'énergie sera transportée de cette source vers l'unité 1 par des conducteurs électriques qui peuvent être intégrés au rail de guidage 4 ou formés par ce dernier, ou bien encore être formés par un câble électrique multi-âmes.

Dans la forme de réalisation objet de la figure 1, le rail de guidage 4 est formé d'un profilé tubulaire de section droite quadrangulaire et comporte une fente longitudinale 40 ménagée dans sa paroi inférieure, laquelle, de part et d'autre de la fente 40 forme deux pistes internes de guidage 41 d'égales largeurs, de préférence incurvées.

Il va de soi que l'invention n'est pas limitée à cette forme particulière de ce rail de guidage 4, ainsi ce rail pourra être de section droite circulaire, ovale, ou bien être constitué par tout autre type de profilés pleins ou creux par exemple des profilés du type IPN. De même, l'unité de surveillance 1 pourra être portée par deux rails parallèles afin d'accroître sa stabilité mécanique.

L'unité de surveillance 1 comprend un châssis 10 métallique formant un carter substantiellement de forme parallélépipédique, comprenant une paroi supérieure, une paroi inférieure, deux parois latérales verticales, parallèles à la direction du mouvement de ladite unité et deux parois transversales, perpendiculaires à cette direction. Préférentiellement, l'une au moins des deux parois latérales est amovible pour un accès au volume interne du carter. À ce carter 10 sont fixés des moyens 11 de guidage le long du rail de guidage 4. Avantageusement, ces moyens sont formés par des organes de roulement 110, sous forme de roulettes, agencés en trains, portés par des supports verticaux 111 fixés à la paroi supérieure du châssis 10 de ladite unité de traitement 1. Les trains d'organes de roulement sont engagés dans le rail de guidage 4 et les organes de roulement 110 prennent appui sur les pistes de guidage 41 que comporte le rail de guidage 4. Les supports 111 de ces trains d'organes de roulement sont engagés dans la fente 40 et s'étendent de manière transversale à cette dernière.

Avantageusement, chaque support vertical 111 est prolongé vers le bas par une tige filetée engagée dans un perçage traversant pratiqué dans la paroi supérieure de carter 10. Dans le carter 10, cette tige filetée reçoit au moins un organe élastique et un écrou. L'organe élastique est enfilé sur la tige filetée et est enserré entre l'écrou et la face inférieure de la paroi supérieure du carter.

L'unité de surveillance 1 comporte un moyen d'entraînement le long du rail de guidage 4. Ce moyen d'entraînement est formé par une roue d'entraînement 12 accouplée à un organe moteur 13 d'entraînement fixé au carter 10. La roue 12 est fixée à un axe engagé dans deux paliers de guidage fixés respectivement aux deux parois latérales du carter 10, ledit axe étant par l'une de ses deux extrémités, accouplé à l'arbre de sortie rotatif du moteur d'entraînement 13. Ce moteur 13 du type électrique par exemple est fixé à la paroi latérale correspondante du carter 10, extérieurement à ce dernier.
La roue d'entraînement 12 en majeure partie est interne au carter 10, et est engagée par sa partie supérieure au travers d'une ouverture pratiquée dans la paroi supérieure dudit carter 10 afin de pouvoir être amenée en pression, par sa bande de roulement, contre la face externe de la paroi inférieure du rail de guidage 4. Afin d'accomplir cette dernière opération, les écrous que comportent les tiges filetées des supports 111 des trains d'organes de roulement 110 sont manoeuvrés dans le sens du serrage. On comprend donc qu'en ajustant le degré de serrage des écrous, est ajusté le degré de pression de la bande de roulement de la roue d'entraînement 12 contre le rail de guidage 4.

Chaque organe élastique associé à chaque tige filetée est avantageusement constitué par une rondelle ressort, par exemple, du type Belleville. Ces organes élastiques, en se déformant, ont pour but d'absorber les éventuelles surépaisseurs que peut comporter la face inférieure du rail de guidage 4. Ces surépaisseurs peuvent résulter notamment de la présence d'éléments de jonction entre deux tronçons de rail lorsque ledit rail de guidage 4 est formé de plusieurs tronçons aboutés les uns aux autres. Ces surépaisseurs peuvent également résulter de la présence de pattes de suspension du rail de guidage 4 à l'ossature porteuse du local d'élevage.

Avantageusement, la roue d'entraînement 12 est formée d'un disque central métallique 120 enserré entre deux flasques latéraux 121 dont la bordure périphérique de chacun, en matériau de synthèse, forme la bande de roulement de la roue d'entraînement 12. Le disque central 120 est de plus grand diamètre que le diamètre des flasques latéraux 121 et pénètre dans le rail de guidage 4 par passage au travers de la fente 40 de ce rail 4. Est assuré ainsi un parfait guidage de l'unité de surveillance 1 le long de son rail 4.

Le ou l'un des moyens de surveillance que comporte l'unité de surveillance 1 est avantageusement constitué par un dispositif 5 d'acquisition d'images. Ce dispositif 5 est porté par une patte fixée au châssis 10 de l'unité de surveillance 1.
Ce dispositif, 5 selon une forme préférée de réalisation, est constitué par une caméra vidéo apte à produire des images en niveaux de gris ou en couleur, cette caméra pouvant le cas échéant être associée à un ou des filtres optiques. Le dispositif d'acquisition d'image 5 peut aussi être constitué par une caméra vidéo du type thermique. L'unité de surveillance 1 pourra comporter plusieurs dispositifs d'acquisition d'image, de natures différentes. Ainsi, elle pourra comporter au moins une caméra apte à donner des images vidéo du domaine visible et au moins une caméra infrarouge, au moins une caméra thermique apte à donner des images du spectre infrarouge proche et une caméra dite térahertz apte à donner des images du spectre infrarouge lointain. Il va de soi que l'invention n'est pas limitée à la présence de ce type de dispositif d'acquisition d'image et que tout type de dispositif peut être utilisé. Ainsi, par ce biais, il sera possible de détecter dans le local la présence de zones humides, de zones chaudes, de zones froides de points chauds etc. En réponse à la détection de zones humides, un produit asséchant ou de la litière fraiche pourra être déversée sur la zone concernée.

L'unité de surveillance 1 pourra également comporter au moins une caméra vidéo 3D. Les signaux vidéo issus de ces dispositifs d'acquisition d'images seront traités par l'unité de traitement 3 et plus particulièrement par les logiciels adaptés d'intelligence artificielle que comporte l'unité de traitement. La ou chaque caméra 3D pourra être utilisée pour la surveillance et le suivi de l'engraissement de chaque animal. Les signaux issus de la ou de chaque caméra 3D seront analysés par des logiciels d'intelligence artificielle adaptés pour déduire le poids de l'animal et comparer cette valeur pondérale à une précédente valeur ou à une valeur de référence. L'identité de l'animal dont le poids est surveillé pourra être déterminée à partir de la lecture des étiquettes dont il est doté, ou bien par reconnaissance faciale ou corporelle. La lecture des étiquettes pourra être opérée par une caméra si l'identité est inscrite de manière visible ou par un lecteur RFID dans le cas ou l'identité de l'animal est inscrite dans une puce RFID logée dans l'étiquette.

L'unité de surveillance 1 est équipée d'un moyen de surveillance constitué par au moins un dispositif d'acquisition des sons. Ce dispositif pourra être constitué par un microphone. Ce microphone sera porté par le châssis 10 de l'unité de surveillance 1. Ces signaux sonores pourront être analysés par des logiciels d'intelligence artificielle adaptés pour être interprétés. L'unité de surveillance pourra également être équipée d'au moins un dispositif d'acquisition des infrasons et d'un dispositif d'acquisition des ultra-sons.

L'unité de surveillance 1 est également équipée d'un moyen de surveillance constitué par au moins un capteur du taux d'ammoniaque et/ou un capteur du taux de gaz carbonique et/ou un capteur du taux d'oxygène et/ou un capteur de température et/ou un capteur d'hygrométrie et/ou un fluxmètre et/ou un anémomètre et/ou un capteur du type boule noire.

L'unité de surveillance 1 comporte de préférence un moyen indicateur de sa position le long du rail de guidage 4 par rapport à une référence attachée mécaniquement à ce rail 4. Ce moyen indicateur, selon une forme préférée de réalisation, est formé par une roue suiveuse 14, maintenue en pression contre le rail de guidage 4, et par un organe de mesure du déplacement angulaire de la roue suiveuse 14.
La roue suiveuse 14 est préférentiellement montée sur un bras basculant 140 articulé au carter 10 et rappelé vers le rail de guidage 4 par un organe élastique 141 par exemple un ressort à spires. L'action du ressort 141 force le pivotement du bras 140 vers le rail de guidage 4 et assure le maintien de la roue suiveuse 14 contre ce dernier. L'organe de mesure du déplacement angulaire peut comprendre notamment un codeur du type incrémentiel ou analogique accouplé à la roue suiveuse 14. Les signaux émis par ce codeur seront de préférence analysés par l'unité de traitement 3 pour calculer la position de l'unité de surveillance 1 et par voie de conséquence, la position du ou de chaque module d'intervention attelé à ladite unité de surveillance 1.

Selon une autre forme de réalisation du moyen indicateur de la position de l'unité de surveillance, la roue suiveuse 14 comporte des ouvertures traversantes radiales, régulièrement réparties, alternées avec des parties pleines radiales et l'unité de surveillance 1 porte au moins une cellule de détection apte à détecter les ouvertures et/ou les parties pleines radiales de la roue suiveuse.

Selon une autre forme de réalisation, le moyen indicateur de la position de l'unité de surveillance 1 est constitué par un codeur du type incrémentiel ou analogique ou autre accouplé à la roue d'entraînement 12. Dans ce cas de figure, l'unité de surveillance 1 pourra ne pas comporter une roue suiveuse.

Il est également possible d'utiliser simultanément le moyen indicateur de position associé à la roue d'entraînement 12 et un moyen indicateur de position associé à une roue suiveuse 14.
Ces différents moyens sont aptes à donner une information relative à la position de la dite unité de surveillance 1 le long du rail par rapport à un point d'origine matérialisé par une butée mécanique, non représentée, installée le long du rail de guidage 4, et prévue à être détectée par un capteur, non représenté, porté par l'unité de surveillance 1.

Selon une forme pratique de réalisation, la roue suiveuse 14 est formée d'un disque central 142 enserré entre deux flasques latéraux 143 comportant chacun une bordure en matériau de synthèse formant bande de roulement, le diamètre du disque central étant plus important que celui des flasques latéraux. Sous l'effet de l'action de l'organe élastique 141, le disque central 142 est amené à pénétrer dans le rail de guidage 4 par engagement au travers de la fente 40 de la paroi inférieure du rail 4, et les bordures périphériques des flasques latéraux 143 sont amenées en pression contre le rail de guidage 4 et plus précisément contre la face extérieure de la paroi inférieure de ce dernier. De préférence, les ouvertures traversantes radiales que comporte la roue suiveuse 14 sont pratiquées dans le disque central 142.

Selon une autre forme de réalisation, le moyen indicateur de la position de l'unité de surveillance 1 le long du rail de guidage 4 est constitué d'une part par un système indicateur de distances installé sur le rail et portant des balises de distances indiquant chacune une distance à partir d'une origine, et d'autre part, par un dispositif de lecture des balises portées par le système indicateur.
Selon une forme pratique de réalisation, le système indicateur de distances est formé d'une règle portant des indications de distance sous forme de nombres ou de codes et le dispositif de lecture est formé essentiellement d'un lecteur optique, par exemple une caméra, et d'un logiciel de reconnaissance optique des indications de distance.

Comme dit précédemment, l'unité de surveillance 1 est dotée d'un moyen d'attelage à un module d'intervention, et chaque module d'intervention est équipé d'un moyen d'attelage complémentaire, ces moyens d'attelages de l'unité de surveillance et de chaque module, étant prévu pour coopérer en attelage l'un avec l'autre et étant du type verrouillable, déverrouillable.

Selon une première forme de réalisation, le moyen d'attelage que comporte l'unité de surveillance 1 est formé d'une perche extensible 15, portée par le châssis 10 et actionnée en déploiement ou en rétraction par un mécanisme moteur d'actionnement 16, cette perche 15, comportant en extrémité inférieure, des organes d'ablocage de module d'intervention prévus pour coopérer en ablocage avec des organes d'ablocage complémentaires portés par le ou chaque module d'intervention. Dans ce cas de figure, le ou chaque module d'intervention, au repos, est situé dans une zone dédiée du local et est posé soit au sol, soit sur une plateforme horizontale posée au sol, ou bien encore disposé dans un berceau dédié posé au sol.

Selon une forme pratique de réalisation la perche 15 est creuse et télescopique et le mécanisme moteur d'actionnement en déploiement ou rétraction 16 est interne à la perche. Cette perche 15 s'étend vers le bas, verticalement, depuis le châssis 10 de l'unité de surveillance 1. Cette perche télescopique comprend au moins deux tronçons de perche, supérieur 150 et inférieur 151. Comme on peut le voir, le tronçon inférieur 151 est monté de manière coulissante dans le tronçon supérieur 150, tout en étant bloqué en rotation par rapport à ce dernier. De préférence, les deux tronçons de perche 150, 151 sont formés par des tubes du commerce de section droite carrée.

Selon une forme préférée de réalisation, le mécanisme d'actionnement 16 est interne à la perche télescopique 15. Toujours selon la forme préférée de réalisation, le mécanisme d'actionnement 16 est constitué par :
- un moteur 160 fixé au châssis 10 de l'unité de surveillance 1, et monté dans ce dernier,
- une vis 161 montée dans les deux tronçons de perche 150, 151 et s'étendant axialement dans ces derniers, ladite vis 161 étant fixée par sa partie supérieure à l'arbre de sortie du moteur 160 pour être entraînée en rotation par ce dernier et,
- un écrou 162 dans lequel est engagée en vissage la vis 161, ledit écrou 162 étant fixé en extrémité supérieure du tronçon inférieur 151 de perche.

Ainsi, en raison de ces dispositions, la vis 161 se trouve immobilisée en translation tout en pouvant être entraînée en rotation par l'organe moteur. De cette manière, la rotation de la vis dans un sens ou dans l'autre se traduit par le déploiement de la perche 15 ou sa rétraction.

Selon une première forme de réalisation (Fig 1a), les organes d'ablocage que comporte la perche 15 de l'unité de surveillance 1 sont formés d'un cône de centrage 152, et de griffes de préhension 153 actionnées par au moins un organe moteur 154, tandis que les organes d'ablocage que comporte le ou chaque module d'intervention sont formés d'une part, d'un cône centrage 20, conçu de manière à pouvoir recevoir en emboîtement de forme, le cône de centrage 152 que porte la perche 15 de l'unité de surveillance 1, et d'autre part d'au moins un logement 21 prévu pour recevoir en emboîtement de forme, les griffes de préhension 153. L'axe géométrique de révolution de chacun des deux cônes de centrage 152 et 20 est vertical.

Selon une forme de réalisation, le cône de centrage 152 des organes d'ablocage de l'unité de surveillance 1 est du type mâle tandis que le cône de centrage 20 des organes d'ablocage du ou de chaque module d'intervention est du type femelle et est formé dans un corps rigide cylindrique 20a fixé à la structure du module d'intervention. Comme on peut le voir en figures 1 et 1a, le cône de centrage 152 est fixé en extrémité inférieure du tronçon inférieur 151 de perche dans l'axe de ce dernier.

De préférence, les organes d'ablocage portés par la perche 15 de l'unité de surveillance 1 comportent deux griffes opposées 153 formées chacune par un bras basculant et par un doigt de préhension 153a formé en en extrémité inférieure du bras basculant. Le bras basculant de chaque griffe 153 est articulé par son extrémité supérieure à une chape fixée au tronçon inférieur 151 de perche et est manoeuvré entre une position de dégagement et une position de préhension par un organe moteur 154, constitué de préférence par un vérin. De préférence, le logement 21 prévu pour recevoir les doigts de préhension 153a est formé par une rainure circulaire creusée dans le corps rigide cylindrique 20a depuis la face externe de ce dernier.

En vue de l'attelage d'un module d'intervention, l'unité de surveillance 1 est déplacée le long du rail de guidage 4, au-dessus dudit module d'intervention afin que le moyen d'attelage que porte sa perche 15 soit situé au droit du moyen d'attelage du module d'intervention. La perche 15 est ensuite déployée de façon que le cône de centrage 152 soit engagé dans le cône de 20 dudit module d'intervention. Ensuite, les deux griffes de préhension 153 sont actionnées par les vérins 154 afin que les doigts de préhension 153a pénètrent dans la rainure 21. En vue du transport du module d'intervention, la perche est rétractée.

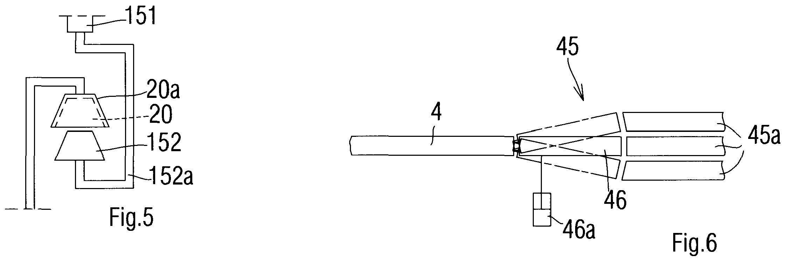

Selon une autre forme de réalisation telle que montrée en figure 5, les organes d'ablocage que comporte la perche extensible 15 sont formés d'un support rigide 152a fixé en extrémité inférieure du tronçon inférieur 151 de perche et d'un cône vertical 152 de centrage porté par ledit support 152a à distance de l'extrémité inférieure de la perche 15, ledit cône 152 et ladite perche étant coaxiaux. Le support rigide 152a substantiellement en forme de J, est doté d'une branche supérieure par laquelle il est fixé en extrémité inférieure du tronçon inférieur 151 de perche 15 et d'une branche inférieure verticale orientée vers le haut et vers la perche 15, à laquelle branche est fixé le cône de centrage 152.
Les organes d'ablocage que comporte chaque module d'intervention sont formés d'un support sous forme d'au moins un bras rigide s'étendant vers le haut et d'un cône vertical de centrage 20 porté par l'extrémité supérieure du support. Le cône de centrage 20, de préférence, se situe au droit du centre de gravité dudit module d'intervention et sa forme est complémentaire de celle du cône 152 porté par la perche 15. Toujours selon la forme préférée de réalisation, le cône de centrage 152 porté par la perche est du type mâle et est fixé par sa grande base à son support. Le cône de centrage 20 porté par le module d'intervention est du type femelle et est formé dans un corps rigide 20a porté par le ou les bras support, la concavité que forme ce cône étant orientée vers le bas.

En vue de l'attelage d'un module d'intervention, l'unité de surveillance 1 est déplacée le long du rail de guidage 4, jusqu'à parvenir au-dessus dudit module d'intervention et sa perche 15 est déployée afin que le cône 152 occupe une position inférieure par rapport au cône 20a du module d'intervention. Ensuite, par déplacement de l'unité de surveillance 1 le cône 152 est amené dans l'axe du cône 20a. Enfin en vue de réaliser la fonction d'attelage, la perche 15 est rétractée afin que le cône mâle soit engagé dans le cône femelle. Cette disposition d'assemblage par cône outre une fonction de centrage permet une immobilisation du module d'intervention par rapport à la perche.

Les organes d'attelage, selon une autre forme de réalisation, sont constitués d'une part d'un crochet basculant 155 articulé au châssis 10 de l'unité de surveillance 1 et associé à un organe moteur 156 de manoeuvre porté par l'unité de surveillance 1 et d'autre part d'un anneau d'attelage 22 porté par le module 2 et prévu pour recevoir en emboîtement de forme le crochet d'attelage 155. L'organe moteur 156 est avantageusement constitué par un actionneur électrique du type vérin par exemple.
Cette forme de réalisation telle que précédemment décrite convient particulièrement à un module d'intervention conçu pour être suspendu au rail de guidage 4. A cet effet, ce module d'intervention sera doté d'un chariot équipé d'organes de roulement et de suspension au rail de guidage 4.

Avantageusement au rail de guidage est associée une zone 45 de stockage dans laquelle est logé le ou chaque modules d'intervention au repos. Comme on peut le voir en figure 6, cette zone de stockage 45 est attenante au rail de guidage 4 (Fig.6).

Avantageusement, la zone de stockage 45 est en relation de communication avec le rail par l'entremise d'un aiguillage 46. Comme on peut le voir en figure 6, la zone de stockage 45 est formé par des tronçons de rail fixes 45a, prévus chacun pour recevoir un module d'intervention. L'aiguillage 46 est formé d'une part d'un tronçon de rail, articulé au rail de guidage 4 et d'autre part d'un organe moteur 46a piloté par l'unité de traitement 3. Le tronçon de rail formant l'aiguillage 46 est en relation de communication par l'une de ses extrémités avec le rail de guidage 4 et par son autre extrémité avec l'un des tronçons de rail 45a de la zone de stockage 45. L'organe moteur 46a que comporte l'aiguillage 46 sera constitué de préférence par un vérin électrique.

En vue de l'attelage de l'un des modules d'intervention, le tronçon de rail articulé formant l'aiguillage est amené par l'organe moteur en correspondance avec le tronçon correspondant de l'unité de la zone de stockage et le module correspondant est attelé à l'unité de surveillance 1 par manoeuvre du crochet basculant 155.

De préférence, l'unité de surveillance 1 comporte cumulativement les deux moyens d'attelage tels que précédemment décrits.

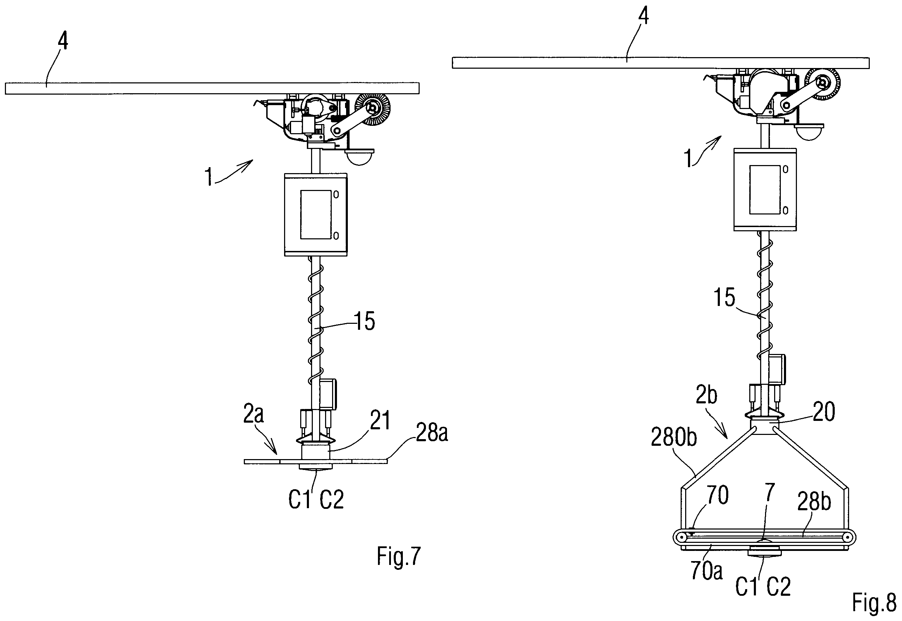

Avantageusement, l'unité de surveillance 1 en vue du pesage des animaux, comporte des jauges de contrainte 17 installées entre son châssis 10 et la perche verticale 15. À cet effet, la perche 10 est fixée par l'extrémité supérieure du tronçon supérieur de perche 150 à une platine horizontale 157 en appui sur deux jauges de contrainte 17 installées de part et d'autre de la perche 15, ces jauges de contrainte 17 étant supportées par une patte du châssis 10 de l'unité de surveillance 1. Selon cette forme de réalisation, l'accouplement de la vis 161 au moteur 160 autorise le déplacement axial de cette vis 161 par rapport à l'arbre de sortie de ce moteur 160. Les signaux émis par les jauges de contrainte 17 seront interprétés par l'unité de traitement 3. Cette disposition autorise un pesage des animaux à l'aide de modules d'intervention 2a, 2b, 2c appropriés décrits ci-après. De tels modules sont représentés aux figures 7 à 10.

La figure 7 montre un module de pesage 2a formé par un plateau horizontal 28a rigide portant en son centre les organes d'attelage 20, 20a, 21 tels que précédemment décrits. Ce module de pesage est principalement destiné au pesage de la volaille, mais moyennant toutes adaptations à la portée de l'homme de l'art concernant notamment le plateau, l'unité de surveillance 1, le rail de guidage 4 et les éléments de suspension de ce dernier, il peut être adapté au pesage d'animaux de poids bien plus important tels que bovins, porcins, ovins, caprin.

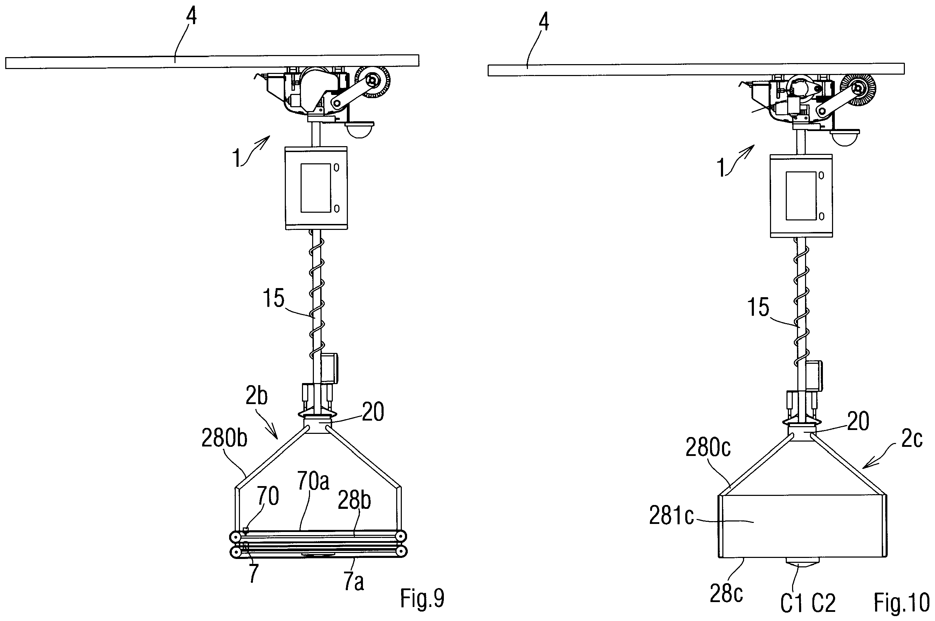

En figure 8 et 9 est représentée une deuxième forme de réalisation d'un module de pesage de la volaille. On peut voir sur cette figure que ce module d'intervention 2b comprend un plateau horizontal 28b porté par des anses rigides 280b portant en extrémité supérieure des organes 20, 20a, 21, tels que précédemment décrits, d'attelage à la perche 15 de l'unité de surveillance.

En figure 10 est représentée une troisième forme de réalisation d'un module de pesage. Ce module de pesage 2c est agencé en nacelle compartimentée et est prévu pour le pesage des animaux morts et des animaux blessés. Cette nacelle comporte un plateau rigide horizontal 28c, des parois verticales 281c dressées sur le plateau rigide 28c et des anses rigides 280c fixées au plateau rigide horizontal 28c et portant en extrémité supérieure les organes d'attelage 20, 20a et 21 tels que précédemment décrits. Ce module de pesage 2c est utilisable également pour l'évacuation de ces animaux vers des lieux dédiés.

De préférence, (Figs 8 et 9) le plateau 28b, du module d'intervention 2b utilisable pour le pesage des animaux reçoit en fixation sur sa face inférieure au moins un capteur de température C1 et au moins un capteur d'hygrométrie C2, un capteur d'ammoniaque, un capteur, non représenté, d'analyse de composition chimique, par utilisation de la technologie NIRS (near-infrared spectroscopy), dont les signaux et données sont analysés par l'unité de traitement 3, un capteur d'analyse de la composition de la litière et un capteur d'analyse de la composition des fèces. Par déploiement de la perche 15, il devient possible d'amener les capteurs au contact ou faible distance du sol ou de la litière ou des fèces pour en mesurer s'agissant de la litière notamment la température, l'hygrométrie le taux d'ammoniaque dégagé, par la litière et s'agissant des fèces, leur composition.

Selon une disposition additionnelle de l'invention, le module 2b de pesage comporte un moyen d'examen de l'état sanitaire des pattes des animaux, actif lors de la pesée, afin de détecter lors de la pesée toutes blessures et infections telles que pododermatites. Selon une forme pratique de réalisation, le plateau 28b du module de pesage 2b est agencé en caisson étanche parallélépipédique et le moyen d'examen de l'état sanitaire des pattes comporte un dispositif 7 d'acquisition d'images logé dans le caisson étanche. Le caisson étanche comprend une paroi supérieure horizontale prévue pour recevoir les animaux à peser. Cette paroi est formée en matériau transparent à la lumière, par exemple la lumière visible. L'axe optique du dispositif 7 d'acquisition d'images est orienté vers la paroi transparente à la lumière.
Par analyse des images données par le dispositif 7 d'acquisition d'images ou formées à partir des signaux délivrés par ce dernier, l'unité traitement 3 et les logiciels adaptés d'intelligence artificielle dont elle est équipée, seront aptes à détecter toutes blessures des pattes, des sabots et de la zone plantaire ainsi que toutes infections telles que pododermatites, abcès de bréchet et autres altérations.

Selon une première forme de réalisation (Fig.8), le dispositif 7 d'acquisition d'images, est constitué par au moins une caméra vidéo de préférence du type grand angle installée fixement dans le caisson dans la zone centrale de ce dernier.

Selon une autre forme de réalisation (Fig.9), le dispositif 7 d'acquisition d'image est formé par une pluralité de capteurs d'images. Ces capteurs sont agencés selon une ligne et sont montés fixement sur un équipage monté de manière mobile sur des glissières horizontales, parallèles, montées dans le caisson sous la paroi supérieure transparente, ledit équipage mobile étant déplaçable dans le caisson sous ladite paroi supérieure transparente par un moyen moteur formé d'une part d'une transmission de mouvement en prise avec l'équipage mobile et d'autre part d'un organe moteur fixé dans le caisson et en prise avec la transmission de mouvement. Cette transmission de mouvement, selon une forme pratique de réalisation est constituée par au moins une courroie sans fin 7a, de préférence crantée, montée sur une poulie menante et une poulie menée, toutes montées en rotation sur des axes fixés au caisson, la poulie menante étant accouplée à l'organe moteur. Cet organe moteur est piloté et contrôlé de préférence par l'unité de traitement 3.

Selon une autre forme de réalisation, le dispositif d'acquisition d'images en vue de l'analyse de l'état des pattes des animaux, est constitué par au moins une sonde à ultra-sons.

En vue de nettoyer la paroi supérieure transparente (Figs 8 et 9), le caisson est équipé d'un moyen de nettoyage constitué par exemple par un organe de raclage 70 mobile sur ladite paroi supérieure transparente du caisson et en appui sur cette paroi supérieure. Cet organe de raclage 70 est entraîné le long de la paroi supérieure transparente du caisson par des moyens moteurs comprenant par exemple deux courroies sans fin 70a, latérales montées en tension entre des poulies menantes et menées, les poulies menantes étant montées de préférence sur un axe commun monté sur des paliers fixés au caisson, ledit axe étant accouplé à un organe moteur. Les poulies menées sont quant à elles montées en rotation sur des axes fixés au caisson.

Avantageusement, à l'organe de raclage sont associées plusieurs buses (non représentées) aptes à la projection d'un liquide de nettoyage. Ces buses sont orientées de telle sorte que le liquide de nettoyage soit projeté sur la paroi supérieure transparente du caisson.

On peut voir en figure 1 et 4 un module 2d d'épandage ou de distribution de produits, attelé à l'unité de surveillance 1. Ce module d'épandage 2d est soit porté par l'unité de surveillance 1 et est attelé à la perche 15 (Fig.1) soit tracté par l'unité de surveillance 1 et dans ce cas suspendu au rail de guidage 4 par des roulettes et attelé au châssis de ladite unité de surveillance 1 (Fig.4).

Ce module d'épandage 2d, selon ses deux formes de réalisation comprend un canon d'épandage 23 horizontal ou incliné par rapport à l'horizontale, porté par une conduite d'alimentation rigide 24 formée de deux segments de conduite amont 240 aval 241, réunis l'un à l'autre par un joint tournant 242, ledit canon 23 étant connecté au segment aval de conduite rigide par un manchon élastiquement déformable 230. Un premier organe moteur 231 est installé entre le canon 23 et le segment aval 241 de conduite en étant couplé cinématiquement à ces derniers et un second organe moteur 243 est accouplé respectivement aux deux segments de conduite 240, 241 et ce de part et d'autre du joint tournant 242.

Le segment aval de conduite 241 forme un coude de préférence à angle droit et est raccordé verticalement au joint tournant 242. Ce joint tournant est formé de deux parties emboîtées l'une dans l'autre de manière à pouvoir pivoter l'une par rapport autour d'un axe vertical.
Le segment de conduite amont 240 comporte un élément vertical support qui peut être soit un mât doté en partie supérieure d'organes d'attelage 20, 20a, 21 à la perche 15 comme précédemment décrit.
Dans le cas d'un module suspendu au rail de guidage 4, cet élément support sera constitué d'une perche télescopique verticale, et d'un chariot suspendu par des roulettes au rail de guidage 4. La perche télescopique est formée d'un tronçon de perche supérieur et d'un tronçon de perche inférieur, et est fixée par la partie supérieure du tronçon supérieur au chariot suspendu. Les tronçons de perche sont montés en coulissement l'un dans l'autre tout en étant immobilisé en rotation l'un dans l'autre. Comme précédemment, cette perche télescopique sera actionnée en rétraction ou en déploiement par un mécanisme d'actionnement. Ce mécanisme d'actionnement sera constitué par un moteur de préférence interne au chariot du module, par une vis montée dans les deux tronçons de perche et s'étendant axialement dans ces derniers, ladite vis étant fixée par sa partie supérieure à l'arbre de sortie du moteur pour être entraînée en rotation par ce dernier et par un écrou dans lequel est engagée en vissage la vis 161, ledit écrou étant fixé en extrémité supérieure du tronçon inférieur de perche.

Le tronçon inférieur de perche est fixé par son extrémité inférieure au segment amont 240 de conduite. On comprend que le canon et les deux tronçons de conduite sont supportés selon le cas soit par le mât soit par la perche télescopique.

Le segment amont 240 de conduite est connecté à une conduite souple aérienne d'alimentation en produits, cette conduite étant prévue pour être connecté à un serveur distant de délivrance de produits installé à l'extérieur du local d'élevage, ces produits pouvant être des produits de litières ou des produits nourriciers. Le transport des produits depuis le serveur vers le canon d'épandage 23 est effectué par voie pneumatique, c'est que ces produits sont transportés sur leur lieu d'utilisation par un courant d'air porteur. Cette technique présente l'intérêt d'une possibilité de transport des produits sur des distances relativement importantes, de l'ordre de plusieurs centaines de mètres. Elle présente également l'intérêt d'éviter le transport sur le rail avec le module d'intervention d'une réserve de produits, lourde en soi, cette dernière demeurant à l'extérieur à poste fixe. Ainsi, les éléments de soutien du rail de guidage 4 et ce dernier n'auront nul besoin d'être renforcés. De préférence la conduite souple d'alimentation sera supportée soit par un rail dédié soit par le rail de guidage 4.

Les deux organes moteurs 231 et 243 sont pilotés et commandés par l'unité de traitement 3. L'organe moteur 231 a pour but de d'ajuster l'inclinaison du canon par rapport à l'horizontale c'est-à-dire son élévation et éventuellement d'entraîner le canon selon un mouvement d'oscillation dans un plan vertical. L'organe moteur 243 a pour but d'ajuster l'azimut du canon, c'est-à-dire sa position angulaire dans un plan horizontal et éventuellement de commander et piloter un mouvement de rotation ou d'oscillation du canon dans un plan horizontal. En outre la perche télescopique et son mécanisme d'actionnement auxquels le module d'épandage est associé permet d'ajuster la hauteur du canon par rapport au sol.

Préférentiellement, l'organe moteur 231 est constitué par un vérin électrique solidarisé par son corps au segment aval 241 de conduite et par sa tige au canon 23. Le degré de déploiement ou de rétraction de ce vérin sera mesuré par exemple par une règle potentiométrique ou par tout autre moyen adapté connu.

L'organe moteur 243 du type électrique, est porté par une monture fixée au segment amont 240 de conduite et présente un arbre de sortie rotatif accouplé à une transmission de mouvement formé par exemple d'un pignon denté accouplé à son arbre de sortie et d'une roue dentée accouplée au segment aval de conduite et en prise avec le pignon denté. La position angulaire du canon 23 dans le plan horizontal est contrôlée par un capteur angulaire dont les signaux seront analysés par l'unité de traitement 3. Ce capteur angulaire est accouplé soit à l'arbre de sortie de l'organe moteur 243 soit à l'un des éléments de la transmission de mouvement.

Ce module 2d d'épandage et de distribution est utilisable pour les opérations de formation d'une litière dans un local d'élevage mais aussi pour l'épandage localisé de ces produits sur des zones humides ou souillées identifiées en tant que telles par l'unité de traitement 3 et les logiciels adaptés d'intelligence artificielle et ce à partir des images délivrées par la ou les caméras équipant l'unité de surveillance 1. Il y a lieu de noter que les zones souillées sont identifiées à partir des images délivrées par une caméra fonctionnant dans le spectre visible tandis que les zones humides, généralement plus froides, sont identifiées à partir des images délivrées par une caméra thermique. Pour affiner le recouvrement des zones humides, le canon d'épandage porte une caméra thermique 244 orientée de telle sorte que son axe optique soit parallèle à l'axe géométrique longitudinal du canon. Les signaux émis par cette caméra thermique seront traités par l'unité traitement 3 et par les logiciels d'intelligence artificielle adaptés.
Grâce à ces différentes dispositions, il sera également possible de projeter et d'épandre des produits de litière en présence des animaux sans pour autant projeter ces produits sur ces animaux.

Avantageusement, le canon 23 reçoit au niveau de sa bouche de sortie un déflecteur articulé 255 dont l'inclinaison face à la bouche de sortie est ajustable par un organe moteur 256 constitué par exemple par un vérin électrique piloté et contrôlé par l'unité de traitement 3. Ce déflecteur a notamment pour but d'orienter plus ou moins vers le bas le jet en sortie du canon.

Préférentiellement, en amont du canon 23, sur la conduite souple d'amenée du produit sont disposés des détecteurs du type infrarouge aptes à détecter des corps enflammés ou à température élevée transportés dans ladite conduite. Dans le cas d'une détection de ces corps, le déflecteur 255 sera manoeuvré dans le sens de l'obturation de la bouche du canon pour éviter que ces corps n'atteignent la litière. Toujours en amont du canon, la conduite souple pourra recevoir un détecteur acoustique apte à détecter les sons produits par le passage de corps étrangers. Dans le cas d'une telle détection le déflecteur 255 sera manoeuvré vers le bas pour renvoyer ces corps vers un réceptacle porté par le canon sous sa bouche de délivrance.

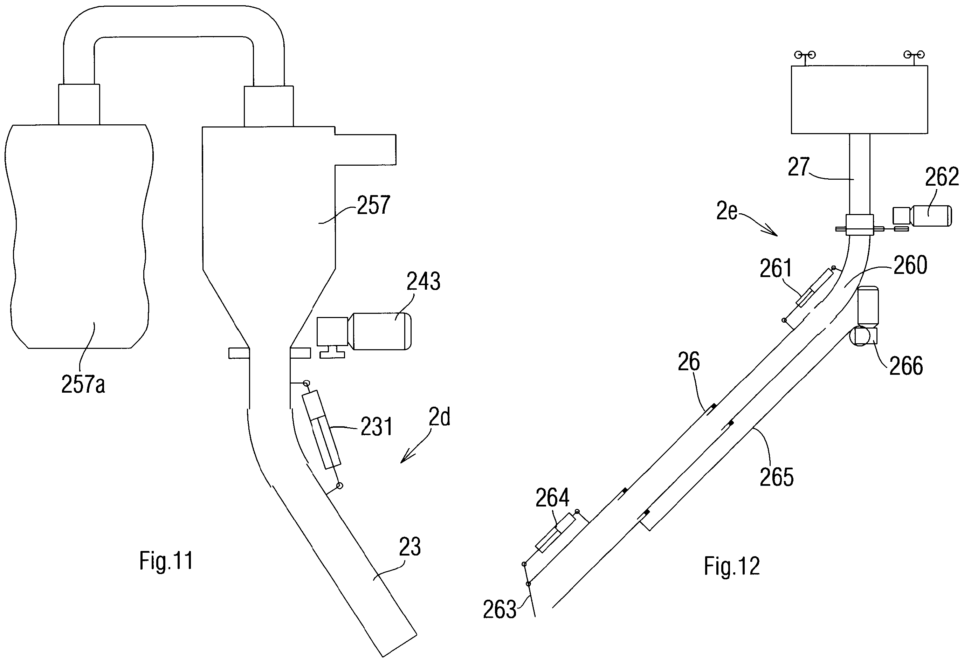

Certains produits lors de leur épandage peuvent générer des poussières et pour cette raison, il est avantageux de dépoussiérer ces produits avant leur épandage ou distribution. Pour cette raison, entre la conduite souple d'alimentation du module d'épandage et de distribution 2d et le segment amont 240 de conduite est installé un moyen de dépoussiérage constitué par exemple, d'un cyclone 257 associé à un sac 257a de récupération des poussières (Fig. 11).

Le module 2d d'épandage et de distribution, tel que décrit, permet d'épandre dans le local d'élevage des produits de litière, mais peut également être utilisé pour épandre tout autre type de produits tels que des produits nourriciers. Ces produits nourriciers pourront être des produits solides en grains tels que maïs, des produits liquides tels que lait, eau d'abreuvement et soupe, des produits pâteux tels que des compositions alimentaires à base d'eau et de farines de céréales, des produits en poudre tels que farines de céréales. Ils pourront être des produits fourragers sous forme de foins, de granules et autres. Les produits secs pourront être distribués dans des nourrisseurs, par exemple des auges de nourrissage, ou bien déposés au sol ou sur la litière afin d'enrichir cette dernière et distraire les animaux pour améliorer leur bien être et calmer leur agressivité envers leurs congénères.

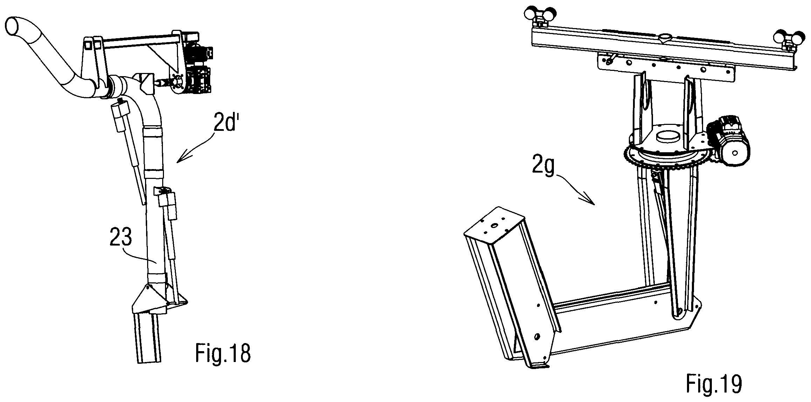

En figure 18 est représentée un module d'épandage et de distribution 2d' conforme au module 2d à la différence que le canon oscillant 23 est orienté vers le sol et occupe au repos une position verticale. Dans cette configuration, le canon oscille dans un plan vertical. Cette autre disposition spatiale du module d'épandage 2d est principalement destinée au remplissage des nourrisseurs. On remarque sur cette figure que ce module d'épandage 2d' est porté de manière ajustable en hauteur par une perche fixée à un chariot avec roulettes de suspension au rail de guidage 4.

Avantageusement, l'ensemble de surveillance est équipé d'un module additionnel 2e apte notamment à l'épandage à la distribution et au prélèvement, comprenant un chariot de suspension au rail de guidage 4 auquel est solidarisée, par l'intermédiaire d'une conduite rigide 27, l'extrémité supérieure d'une lance télescopique 26 prévue pour être en relation de communication avec un tuyau souple d'amenée d'un produit. La lance télescopique 26 est formée d'un tronçon de conduite proximal, d'un tronçon de conduite distal et éventuellement d'un ou plusieurs tronçons intermédiaires.
Le tuyau souple est raccordé à un serveur distant, externe au local d'élevage, ledit serveur étant pourvu d'une réserve de produits à délivrer.

La conduite rigide 27 est connectée d'une part au tuyau souple et d'autre part à lance 26 et plus particulièrement au tronçon proximal, par l'intermédiaire d'un manchon souple 260. Cette conduite est formée de deux segments de conduite amont 270, aval 271 raccordés l'un à l'autre par un joint tournant 272. Le segment amont 270 de conduite est fixé au chariot du module 2e et est raccordé au tuyau d'alimentation en produits, tandis qu'au segment aval 271 de conduite est raccordé le manchon souple 260.

La lance télescopique 26, est dotée de moyens moteurs de rétraction et de déploiement. Cette lance est orientable en azimut et élévation par des organes moteurs 261, 262 pilotés par l'unité de traitement 3.
Ainsi à partir d'une même position du module additionnel 2e, différents points du bâtiment pourront être atteints par la lance 26. Cette lance 26 est formée par exemple d'un tronçon de lance proximal et d'un tronçon de lance distal, montés en coulissement les uns dans les autres avec interposition de joints d'étanchéité.

L'organe moteur 261 a pour but d'ajuster l'inclinaison de la lance 26 par rapport à l'horizontale et éventuellement entraîner la lance selon un mouvement angulaire d'oscillation d'amplitude ajustable, tandis que l'organe moteur 262 a pour but d'ajuster l'azimut de la lance, c'est-à-dire sa position angulaire dans un plan horizontal et éventuellement d'entraîner la lance selon un mouvement de rotation ou d'oscillation dans un plan horizontal. Avantageusement, l'organe moteur 261 est connecté mécaniquement à la lance 26 et au segment aval 271 de conduite rigide et est formé préférentiellement par un vérin électrique. L'organe moteur 262 est porté par le segment amont de conduite ou par le chariot et est connecté cinématiquement au segment aval de conduite par une transmission de mouvement formée par un pignon denté fixé à l'arbre de sortie de l'organe moteur 262 et par une roue dentée en prise avec le pignon denté et accouplée au segment aval 271 de conduite.

La position angulaire de la lance 26 dans le plan horizontal est contrôlée par un capteur angulaire dont les signaux sont interprétés par l'unité de traitement 3. Ce capteur angulaire est accouplé soit à l'arbre de sortie de l'organe moteur 262 soit à l'un des éléments de la transmission de mouvement. La position angulaire de la lance 26 peut être également contrôlée par temporisation.
Alternativement, les positions angulaires de la lance 26 sont contrôlées par une caméra.

La lance 26 à son extrémité distale comporte un clapet de fermeture 263 manoeuvrable par un organe moteur 264 porté par le tronçon distal et prévu pour être commandé par l'unité de traitement 3. De plus, aux deux tronçons distal et proximal de la lance est fixé un moyen mécanique de rétraction piloté par l'unité de traitement 3, forçant la rétraction de la lance lorsqu'il est activé ou limitant le déploiement de cette dernière.

Par fermeture du clapet 263 et introduction d'un fluide sous pression dans la lance 26 est obtenu le déploiement de cette dernière, le degré de déploiement de la lance étant contrôlé par l'unité de traitement 3 par action sur le moyen mécanique de rétraction. Ensuite, le clapet peut être ouvert par action de l'organe moteur correspondant pour délivrer le produit.

Avantageusement, le moyen mécanique de rétraction est formé d'un câble de traction 265 fixé par son extrémité libre au tronçon distal de lance et d'un enrouleur de câble 266 fixé au tronçon proximal, ledit enrouleur de câble 266 comportant un tambour d'enroulement sur lequel s'enroule le câble, un organe moteur accouplé au tambour d'enroulement, et un codeur accouplé au tambour ou au moteur, ce codeur pouvant être du type incrémental ou analogique. Ce codeur est apte à délivrer une information sous forme de signaux, relative au degré de déroulement ou d'enroulement du câble et par voie de conséquence au degré de déploiement ou de rétraction de la lance 26.
Connaissant la position du module 2e le long de son rail support, la position angulaire de la lance 26 tant en azimut qu'en élévation, ainsi que son degré de déploiement ou rétraction, il devient possible de déterminer avec précision la position de l'extrémité distale de la lance dans le local. Inversement, connaissant la position géographique que doit atteindre l'extrémité de la lance 26, il sera possible de positionner le chariot du module 2e dans une position la plus propice, et de positionner la lance tant en azimut, élévation et extension.

Le module 2e avec sa lance 26, tel que décrit, peut être utilisé pour diverses tâches. Il peut être utilisé en tant que moyen d'appoint de lutte contre l'incendie et à cet effet la lance 26 sera connectée par l'entremise de la conduite souple à un serveur externe au local doté d'une réserve de produit extincteur.
Le produit extincteur pourra être constitué par de l'eau, par de la mousse ou par un matériau particulaire incombustible transporté par un fluide sous pression. Le matériau particulaire pourra être constitué par du sable, ou de la poudre d'un matériau adapté, tandis que fluide sous pression pourra être de l'air ou alors un gaz non comburant. Le fluide sous pression pourra aussi être constitué par un liquide incombustible par exemple de l'eau. Pour aider à la lutte contre l'incendie, la lance pourra être équipée d'une caméra thermique dont les signaux sont transmis à l'unité de traitement 3.

Le module 2e et plus particulièrement sa lance 26 pourra être utilisé pour épandre des produits nourriciers tels que des céréales, pâtes alimentaires, soupes et autres. Dans ce cas le tuyau souple d'alimentation de la lance 26 sera connecté à un serveur, externe au local, de délivrance de ces produits alimentaires.
Le module 2e et plus particulièrement sa lance 26 peut également être utilisé en tant que moyen annexe ou principal de délivrance de produits de litière.
Il peut également être utilisé en tant que moyen apte à s'opposer ou gêner l'action non désirée d'un animal. S'agissant d'une poule pondeuse, le module 2e sera utilisé pour gêner la ponte en dehors des nichoirs. A cet effet la lance pourra être utilisée pour diriger un jet d'air sous pression sur le corps de la poule pondeuse.
Le module 2e et plus particulièrement sa lance 26 peut aussi être utilisé en tant que moyen de prélèvement d'échantillons de l'atmosphère du local. À cet effet la lance 26 sera connectée à un bipasse 267, commandé par l'unité de traitement 3, dont une voie est connectée à un serveur de produits et dont l'autre voie est connectée à une pompe à vide 268 en relation de communication avec un analyseur de gaz 269. Par action sur le bipasse, le volume interne de la lance sera connecté à la pompe à vide 268 et par ouverture du clapet 263 d'extrémité et activation de la pompe un échantillon de l'atmosphère du local sera aspiré dans la lance pour ensuite être refoulé vers l'analyseur 269 et analysé. Avantageusement, l'analyseur sera installé à poste fixe dans le local ou dans un local annexe.

La lance 26 du module 2e peut être équipée en extrémité libre de divers capteurs aptes à délivrer des informations relatives à des paramètres physiques et/ou chimiques et/ou biologiques propres au local et à son atmosphère et des capteurs aptes à délivrer des informations relatives aux données physiologiques des animaux.

L'ensemble de capteurs aptes à délivrer des informations relatives à des paramètres physiques et/ou chimiques propres au local et à son atmosphère pourront pourra comprendre, non limitativement, au moins un capteur de saisie de la température de l'atmosphère du local, au moins un capteur de saisie du taux d'hygrométrie de l'atmosphère du local, au moins un capteur de saisie du taux de gaz carbonique de l'atmosphère du local, au moins un capteur de saisie de l'intensité lumineuse dans le local, au moins un capteur de saisie de la vitesse de l'air dans le local. Additionnellement, cette lance 26 pourra être équipée non limitativement d'au moins un capteur saisie de la température de la litière et d'au moins un capteur de saisie du taux d'humidité de la litière, ces saisies, selon la nature des capteurs pouvant être effectuées par contact direct ou à distance.
Ces différentes saisies seront effectuées en différents points du local et de la litière. Les données recueillies et les coordonnées géographiques des points seront enregistrées. Ainsi à chaque point géographique du local pourront être associées les valeurs des paramètres ou grandeurs mesurées. Par ce biais, il sera possible de réaliser une ou plusieurs cartographies en trois dimensions du bâtiment, associées chacune à une représentation sous une forme adaptée des différentes valeurs de la grandeur mesurée. Par exemple, s'agissant de la température du local, cette visualisation pourront prendre la forme d'une gradation de couleurs allant du bleu ou rouge, la couleur bleu étant associée aux températures les moins élevées et le rouge aux températures les plus élevées. S'agissant des flux d'air, la représentation de ces derniers pourra se présenter sous la forme de vecteurs, chacun illustrant pour le point correspondant, la direction, le sens et l'intensité dudit flux. Ces différentes représentations permettront de mettre en évidence les différentes disparités et anomalies à corriger.

Il ya lieu de noter que la faible masse de l'unité de surveillance 1 et du module additionnel 2e et notamment de sa lance 26 permettent des déplacements rapides dans le local ainsi que des prises rapides de mesures de sorte qu'une évolution, dans le local, de la grandeur mesurée, dans la mesure ou cette évolution est lente, n'aura pas d'influence significative sur les résultats des mesures.

L'ensemble des capteurs aptes à délivrer des informations relatives à l'identité et aux paramètres physiologiques des animaux pourra comprendre éventuellement au moins un capteur de température corporelle, la saisie de cette température pouvant être effectuée par contact direct ou à distance. S'agissant d'un palmipède, la température du bec donnera une indication sur son état d'engraissement.
L'ensemble de capteurs pourra également comprendre éventuellement, non limitativement, au moins un capteur apte à la saisie de l'identité de l'animal, éventuellement au moins un capteur apte à la saisie du rythme cardiaque de l'animal et éventuellement au moins un capteur apte à la saisie du rythme d'halètement de l'animal ou de sa respiration. Ainsi, à chaque animal seront associés divers paramètres relatifs à son état de santé. Il sera possible ainsi de détecter rapidement les animaux malades et les isoler tout aussi rapidement du reste de l'élevage en vue d'un traitement curatif. Il sera également possible de détecter rapidement les animaux morts et ceux atteints de morbidité et d'établir des cartographies du bâtiment faisant apparaître les positions des animaux malades, des animaux morts et des animaux morbides. De même, les disparités pondérales pourront être cartographiées.

Il sera également possible, par le biais de la lance 26 de soigner sur place les animaux malades. A cet effet, la lance 26 du module 2e sera connectée à une réserve de produit curatif. De même la lance 26 pourra être équipée d'un dispositif adapté aux soins. Un de ces dispositifs sera constitué par une cloche de confinement prévue pour recouvrir l'animal malade, cette cloche étant en relation de communication avec la lance pour recevoir de cette dernière, par exemple de l'air chargé en oxygène et/ou en toute autre produit de traitement.

De même le module 2e pourra être utilisé pour la désinfection du local d'élevage et à cet effet sera raccordé à un réserve de produit désinfectant.

Le module 2e avec sa lance 26 pourra être utilisé pour lutter efficacement contre la caudophagie porcine, contre le piquage des volailles. Il suffira pour ce faire d'utiliser la lance pour écarter les agresseurs de leurs victimes. Ces agressions pourront être détectées par les caméras et identifiées en tant que telles par les logiciels d'intelligence artificielle équipant l'unité de surveillance 1.
A titre préventif, pour anticiper ces problèmes, la lance d'épandage pourra être utilisée pour distraire les animaux en apportant différents matières tels qu'aliments, céréales, pailles longues, gastrolithes pour inciter les animaux à la recherche d'aliments par grattage ou par fouissage.

Le module 2e avec sa lance 26 peut être utilisé en tant que moyen de nettoyage et à cet effet la lance 26 sera équipée en extrémité libre d'une buse et/ou d'une brosse de nettoyage. La buse sera alimentée en eau par la lance. Dans ce cas de figure cette lance pourra être associée à une tubulure d'aspiration des déchets et des produits de nettoyage. Cette tubulure et la lance pourront être coaxiales et montées l'une dans l'autre. L'intervalle entre la tubulure et la lance sera connecté à une unité d'aspiration afin d'évacuer les déchets et les fluides de lavage utilisés.

Le module 2e avec sa lance 26 peut être utilisé en tant que moyen de vidage, par aspiration, des nourrisseurs. Dans ce cas la lance sera connectée à une unité d'aspiration soit directement soit par l'entremise d'un bipasse.

Les restes de nourriture dans les nourrisseurs seront repérés à partir de l'analyse, par des logiciels d'intelligence artificielle adaptés, des images données par la ou les caméras portées par l'unité de surveillance 1. Après aspiration, les restes de nourriture pourront être pesés. La valeur pondérale des restes de nourriture pourra être déterminée également par analyse, à l'aide de logiciels adaptés d'intelligence artificielle, des images données par la ou chaque caméra 3D. Dans le cas où le nourrisseur est associé à un animal et un seul, la valeur pondérale des restes donnera des indications sur l'état de santé de l'animal, sachant qu'un animal malade à tendance à moins se nourrir.

La lance 26 pourra être utilisée pour l'actionnement des bras de cornadis.

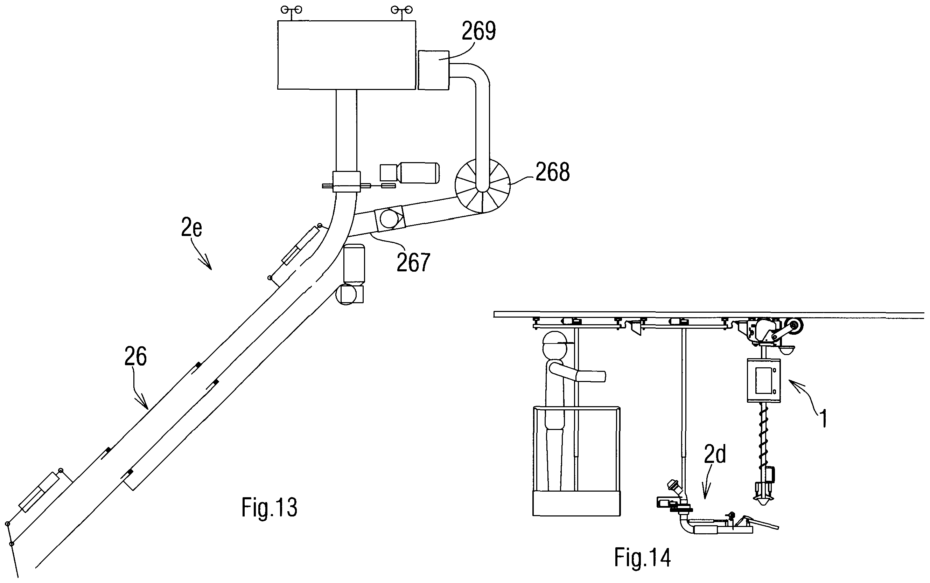

En figure 14, est représenté un module 2d d'épandage et de distribution fixé à une perche télescopique elle-même fixée à un chariot suspendu au rail de guidage 4 comme décrit précédemment. Ce module d'épandage est attelé à une unité de surveillance 1. On observe sur cette figure qu'au chariot suspendu est attelé un module 2h formé d'une nacelle de transport de personne. Cette nacelle est suspendue par des roulettes au rail de guidage 4. Les moyens de rétraction ou de déploiement de la perche support du module d'épandage 2d pourront être commandés par la personne transportée par la nacelle et cette dernière disposera à cet effet d'un boîtier de commande. L'énergie électrique d'alimentation sera délivrée à ce module par l'unité de surveillance 1 ou bien par des batteries embarquées.

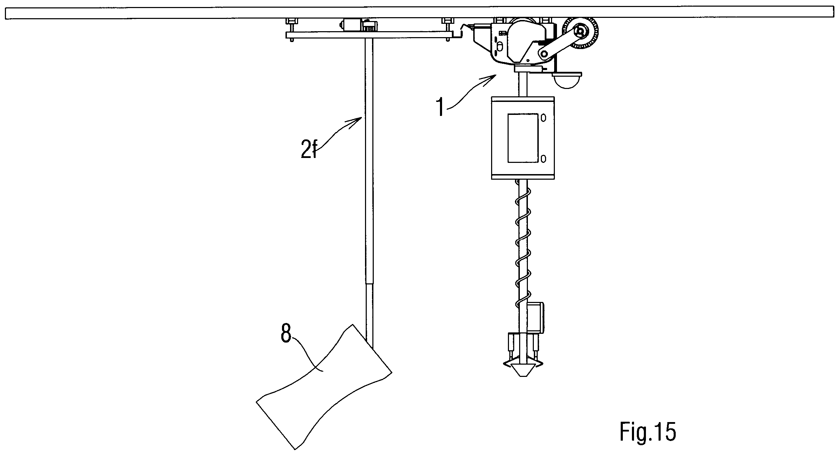

En figure 15, est représenté un module 2f suspendu, utilisable pour le massage et/ou brossage des animaux par exemple des bovidés. Ce module est formé d'un chariot doté d'organes de roulement engagés dans le rail 4 et d'une perche extensible par exemple télescopique dotée de moyens de déploiement et de rétraction formés comme précédemment par un organe moteur porté par le chariot et d'un mécanisme à vis et écrou actionnée par l'organe moteur. Ce module 2f, en extrémité de la perche, porte une monture orientable portant une brosse rotative 8 actionnée en rotation par un organe moteur porté par la monture orientable. La monture est orientable en inclinaison entre une position horizontale et une position verticale.

En figure 19 est représenté un module 2g de manoeuvre et manipulation, formé d'un bras robotisé du type polaire porté par un chariot avec roulettes de suspension au rail de guidage 4. Un tel module est prévu pour recevoir plusieurs outils. Il peut également être équipé d'un tuyau de distribution de produits tels que notamment produits de paillage ou produits nourriciers tels que ceux précédemment évoqués, Ce bras pourra également être utilisé pour le nettoyage de l'unité de surveillance 1 et des capteurs et caméra portés par cette unité et également pour toute autre opération de maintenance par exemple le nettoyage du rail de guidage 4, des locaux etc. Ainsi il pourra porter une lance de lavage alimentée en produit de nettoyage par un tuyau ou tout autre matériel adapté. Il pourra également porter une lance de lutte contre l'incendie.
Comme on peut le voir, sur cette figure ce module de manoeuvre est doté d'une tourelle d'orientation portée par le chariot, à laquelle est articulé le bras robotisé, ce dernier étant formé de plusieurs tronçons de bras articulés les uns aux autres et motorisés.

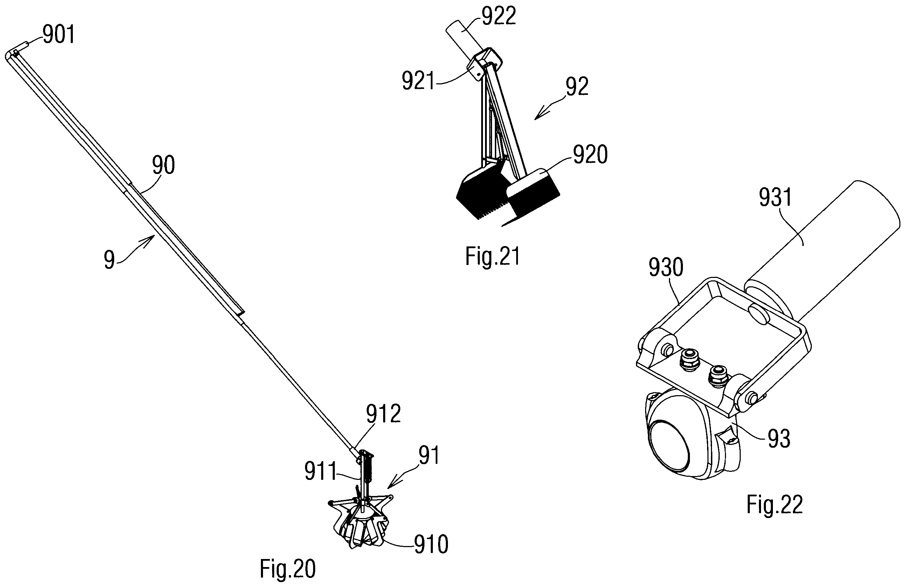

En figure 20 est représentée une perche 9 télescopique prévue pour recevoir différents outils amovibles. La perche 9 est formée de deux tubes cylindriques montés en coulissement l'un dans l'autre, associés à un organe moteur de déploiement et de rétraction constitué par exemple par un vérin 90. Le vérin 90 est solidarisé par son corps à l'un des deux tubes et par l'extrémité de sa tige à l'autre tube.
Sur cette figure on peut voir que la perche 9 est équipée en extrémité inférieure d'un grappin 91 amovible prévu pour le ramassage des animaux morts et d'objets. Ce grappin 91 est formé de plusieurs griffes 910 articulées à un articulées à une platine portée par un mât central 911, actionnées en ouverture et fermeture par un mécanisme d'actionnement formé par des biellettes articulées chacune d'une part à une douille montée en coulissement sur le mât central et d'autre part à l'une des griffes, la douille étant entraînable le long du mât central par un vérin. Le mât central 911 reçoit en articulation, en extrémité supérieure un manchon cylindrique 912, de fixation amovible par emboîtement à l'extrémité inférieure de la perche 9.

En figure 21 est représenté un outil 92 prévu pour le ramassage des oeufs, cet outil étant prévu pour être emmanché sur la perche 9 en lieu et place du grappin 91. Comme on peut le voir sur cette figure, cet outil 92 est formé de deux mâchoires 920 articulées à un même axe porté par une chape 921 et mue en ouverture et fermeture par un vérin. Les deux mâchoires sont formées de dents s'interpénétrant en position de fermeture. La chape 921 est formée en extrémité d'un manchon 922 de fixation amovible par emboîtement à l'extrémité inférieure de la perche 9.

En figure 22 est représentée une caméra 93 avec support, montée sur une monture orientable 930 dotée d'un manchon 931 de fixation amovible par emboîtement à l'extrémité inférieure de la perche. La monture orientable 930 est formée d'une chape portant entre ses deux ailes latérales, deux tourillons axialement alignés auxquels est articulé le support de la caméra 93. Par ailleurs, la chape de la monture 930, par son aile basale, est articulée au manchon 931 de fixation selon l'axe géométrique de révolution de ce dernier. La caméra 93 pourra être utilisée pour scruter les yeux des animaux. Les images obtenues seront analysées par des logiciels d'intelligence artificielle adaptés pour déterminer l'état de santé des animaux.

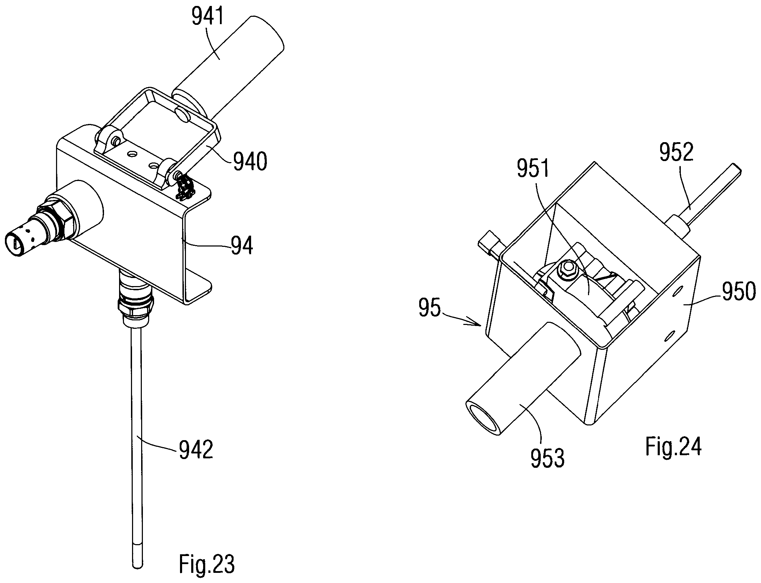

En figure 23 sont représentés des capteurs portés par un support commun 94 solidarisé à une monture orientable 940, équipée d'un manchon 941 de fixation amovible par emboîtement à l'extrémité inférieure de la perche 9.
Comme précédemment, la monture orientable 941 est formée d'une chape portant entre ses deux ailes latérales, deux tourillons axialement alignés auxquels est articulé le support commun 94, porte capteurs. De plus, la chape par son aile basale est articulée au manchon de fixation selon l'axe géométrique de révolution de ce dernier.
Le support 94 porte une sonde de température 942 s'étendant vers le bas prévue notamment pour l'acquisition de la température de la litière. Ce support 94 est également équipé de deux autres capteurs à savoir un capteur d'humidité et un capteur de température ambiante.

En figure 24 est représentée un dispositif de manoeuvre des ridelles de mangeoires et autres dispositifs. Ce dispositif est formé d'un boîtier 950 dans lequel sont disposés un moteur 951 d'entraînement d'un doigt de manoeuvre 952, de section droite carré, monté en rotation dans un palier formé dans le boîtier 950, le doigt de manoeuvre étant en partie externe au boîtier pour être accouplé de manière amovible à l'élément femelle de manoeuvre de ridelle. Le boîtier est équipé d'un manchon 953 de fixation amovible par emboîtement à l'extrémité inférieure de la perche 9.

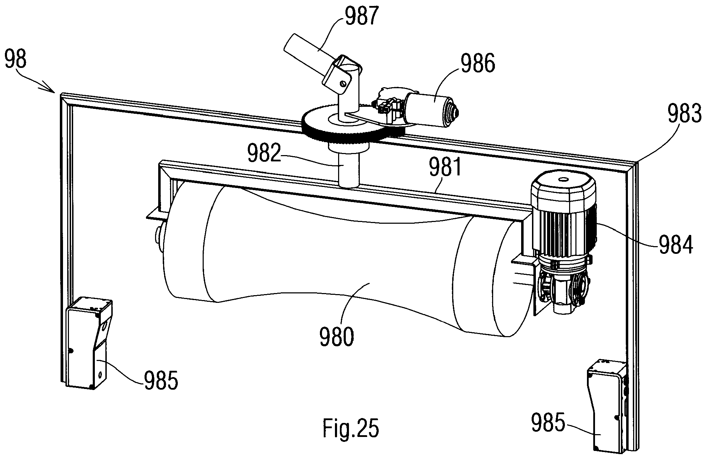

En figure 25 est représenté un appareil vétérinaire 98 d'examen anatomique portant des dispositifs d'exploration non invasive 985 à partir des signaux desquels une ou des images de l'intérieur du corps de l'animal pourront être formées et ensuite analysées par des logiciels d'intelligence artificielle adaptés à la recherche de pathologies. Cet appareil comprend un rouleau d'appui 980, horizontal, motorisé monté en rotation entre les ailes latérales verticales d'un portique 981 en U dont l'aile basale horizontale est dotée en son centre d'un arbre vertical 982 s'étendant vers l'extérieur du premier portique 981, auquel arbre est solidarisé un second portique 983 par son aile basale, ce second portique 983 venant par ses ailes latérales verticales de part et d'autre du premier portique 981, les dites ailes latérales portant chacune un dispositif d'exploration non invasive 985.
Le rouleau 980 est doté de deux tourillons axiaux par lesquels il est engagé en rotation dans deux paliers portés par les branches latérales du premier portique 981. L'un des deux tourillons est accouplé à un organe moteur 984, par exemple un motoréducteur électrique. En vue d'un examen anatomique le rouleau 980 est positionné sur le dos de l'animal et par entraînement en rotation de ce rouleau, l'appareil est entraîné le long du corps de l'animal. De préférence, le second portique 983 est monté en rotation sur l'arbre vertical 982 et est entraînable en rotation par une transmission de mouvement en prise avec un organe moteur 986 fixé à l'arbre 982. Avantageusement, la transmission de mouvement est formée d'une roue dentée fixée à l'aile basale du second portique 983 et d'un pignon denté, en prise avec la roue dentée et fixé à l'arbre de sortie de l'organe moteur 986, ce dernier étant constitué par motoréducteur.
Grâce à ces dispositions, il devient possible d'entraîner les dispositifs d'exploration autour de l'animal.
A l'arbre vertical 982 est articulé un manchon 987 de fixation amovible par emboîtement à l'extrémité inférieure de la perche 9.
Chaque dispositif d'exploration non invasive pourra être constitué, par une sonde échographique, par une sonde stéthoscopique, par une sonde de température, par un capteur de rythme cardiaque et par tout autre dispositif d'exploration connu.

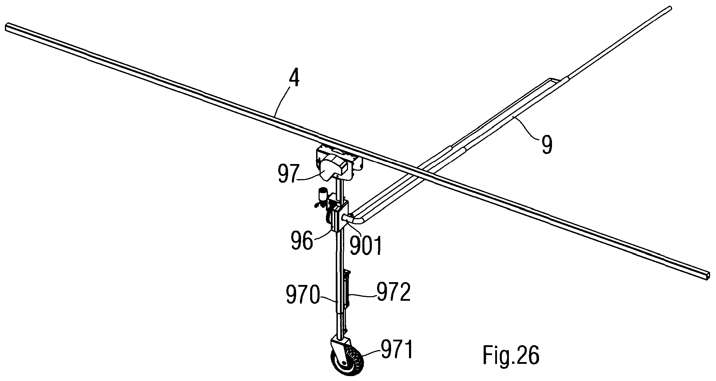

Avantageusement, la perche télescopique 9 est dotée d'une queue 901 de fixation à un boîtier de manoeuvre 96 porté par un dispositif d'entraînement 97 suspendu au rail de guidage 4 par des roulettes et doté d'une roue d'entraînement en pression contre la face interne du rail de guidage 4, cette roue d'entraînement étant accouplée à un moteur du dispositif d'entraînement 97. Comme on peut le voir en figure 26, la queue de fixation 901 est accouplée, à un arbre creux accouplé par l'intermédiaire d'un train d'engrenage à un organe moteur porté par le boîtier de manoeuvre 96. On peut voir également sur cette figure que le dispositif d'entraînement 97 est doté d'un mât vertical 970 télescopique portant en extrémité inférieure, une roue 971 d'appui au sol. Le mât télescopique est sollicité vers une position d'extension par un organe élastique 972, par exemple un ressort à gaz, sous l'effet de l'action duquel la roue 971 est fermement appliquée au sol.
Une telle disposition s'oppose au basculement de l'ensemble lorsque la perche 9 occupe une position de porte à faux latéral.

Au dispositif d'entraînement 97 pourra être fixée une unité de surveillance 1.

Avantageusement l'ensemble de surveillance est équipé d'un ou plusieurs modules télécommandés 6a, 6b, 6c automobiles, pilotés à distance, de préférence par voie hertzienne par l'unité de traitement 3 à partir des informations données notamment par la ou chaque caméra équipant l'unité de surveillance 1. Le ou chaque module télécommandé 6a, 6b 6c est prévu pour évoluer sur le sol du local d'élevage et comprend un châssis monté sur des roues d'appui au sol et/ou sur des chenilles. L'une au moins de ces roues ou chenille est directrice et est associée à une cinématique de direction dotée d'un moteur électrique alimenté par batteries électrique et piloté à distance par voie hertzienne par l'unité de traitement 3. La roue directrice ou l'une au moins autres roues sera accouplée à un moteur électrique alimenté par batterie et commandé par voie hertzienne toujours par l'unité de traitement 3.

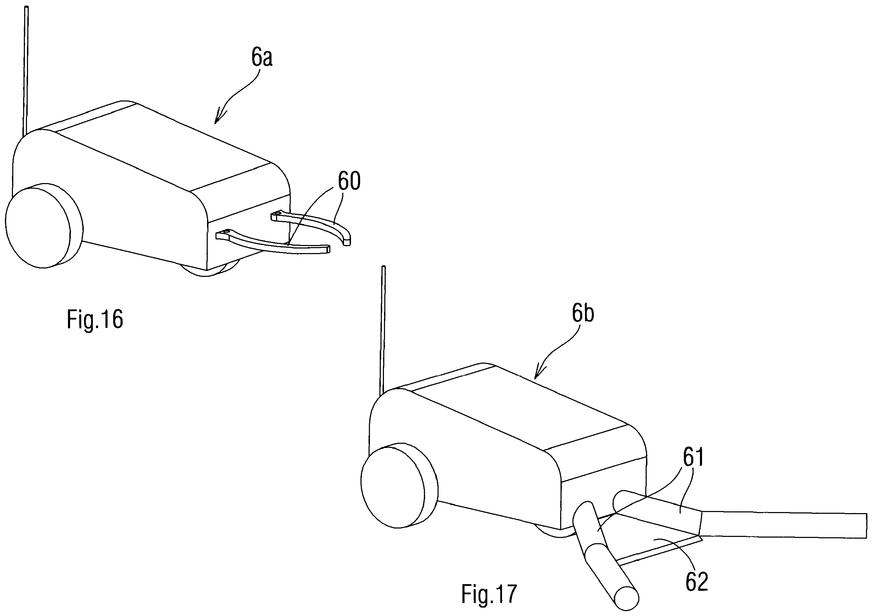

L'un 6a des modules télécommandés (Fig.16) est avantageusement pourvu de pinces de préhension 60 pour le ramassage des animaux morts ou blessés. Ces pinces de préhension sont actionnées par un moteur électrique alimenté par batterie et piloté à distance, par voie hertzienne, par l'unité de traitement 3. Ce module télécommandé 6a est destiné au ramassage de la volaille. Après saisie d'une volaille morte ou blessée, ce module 6a sera dirigé vers le module de pesage 2d pour y être pesé et transporté vers un endroit dédié.

En figure 17, est représenté un autre module 6b télécommandé. Ce module 6b est destiné au ramassage des oeufs. Selon une forme pratique de réalisation, ce module 6b comprend deux bras de rabattage 61 formant un Vé en zone avant et une plateforme 62 de réception des oeufs formée entre les bras.
Avantageusement, selon une autre caractéristique de l'invention, la partie avant de chaque bras est formée par un rouleau horizontal.

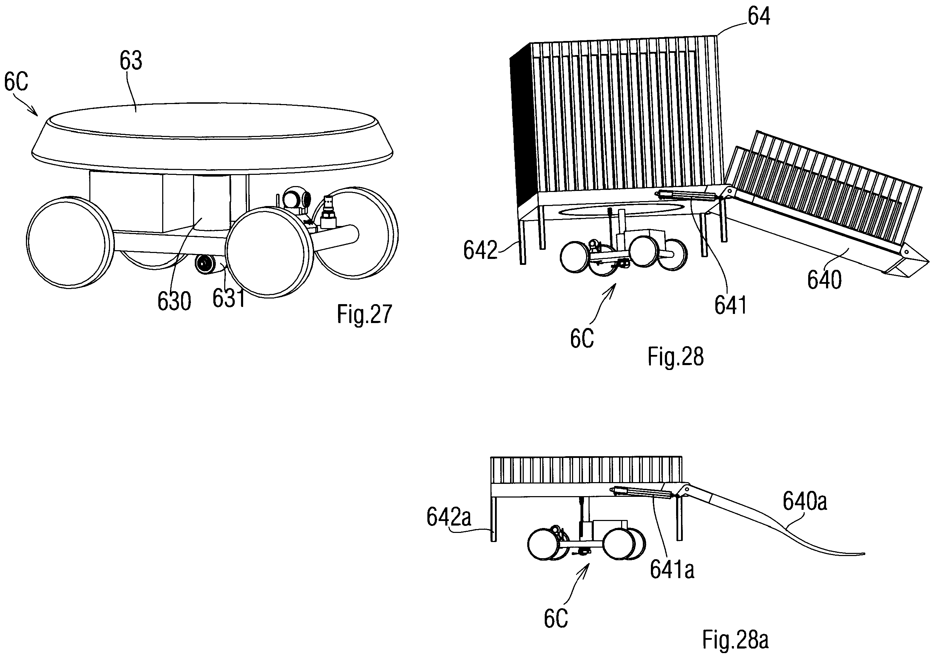

En figure 27 est représenté un module 6c selon une autre forme de réalisation. Ce module 6c présente un plateau supérieur horizontal 63 de contour circulaire et de formé tronconique monté fixement sur la tige d'un vérin à vis, vertical, engagé par son corps en rotation dans un palier fixé au châssis dudit module, le dit vérin étant accouplé par une transmission de mouvement à un organe moteur 631 d'entraînement en rotation porté par le châssis. Ce module 6c est équipé d'une caméra vidéo et de plusieurs capteurs notamment une sonde de température.
Le module tel que décrit est prévu pour recevoir divers accessoires et outils, ces derniers présentant une paroi horizontale dotée d'une empreinte d'assemblage de forme complémentaire de celle du plateau 63 du module 6c afin de recevoir ledit plateau, ladite empreinte étant tournée vers le bas. La paroi horizontale comporte de plus des pieds d'appui au sol. En vue du transport de l'accessoire ou de l'outil devant être utilisé, le plateau du module 6c est abaissé et ce module est engagé sous la paroi horizontale dudit accessoire ou outil. Par la suite le plateau est élevé pour pénétrer d'une part dans l'empreinte et soulever ledit outil ou accessoire.

En figure 28 est représentée un module 6c portant une cage 64 pour le ramassage des animaux malades. On peut voir que cette cage 64 présente une paroi inférieure horizontale dotée de l'empreinte d'assemblage, d'une paroi avant 640 articulée, rabattable vers le sol pour faciliter le chargement de l'animal. Cette paroi avant est dotée d'une rampe d'accès pour faciliter l'introduction de l'animal. La paroi 640 est manoeuvrée entre sa position de fermeture et sa position d'ouverture par un organe moteur 641 constitué par exemple par un vérin électrique.
La cage est dotée de pieds 642 d'appui au sol.
En figure 28a est représentée une cage 64a pour le ramassage des animaux morts installée sur un module 6c tel que précédemment décrit. Cette cage se distingue de la cage 64 par la forme de la paroi avant 640a, cette dernière étant agencée en pelle de ramassage. Cette cage présente une paroi inférieure horizontale dotée d'une empreinte d'assemblage et de pieds 642a d'appui, et un organe moteur 641a de manoeuvre de la paroi avant 640a, cet organe moteur étant constitué par un vérin électrique.

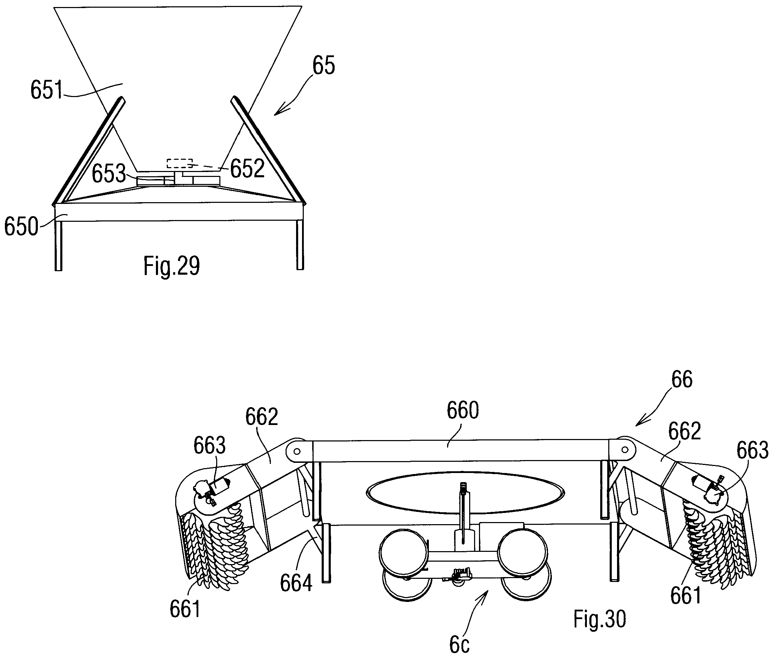

En figure 29 est représentée une distributrice de litière 65 prévue pour être portée par le module 6c précédemment décrit. Cette distributrice de litière comprend une paroi inférieure horizontale 650 portée par des pieds, dotée de l'empreinte d'assemblage, une trémie 651, de forme conique, prévue pour recevoir la litière à distribuer, cette trémie 651 étant portée au-dessus et à distance de la paroi inférieure 650 par des pattes support. Dans la trémie est monté en fixation un moteur 652 d'entraînement en rotation d'un rotor de projection 653 à pales, évoluant entre le fond de la trémie et la paroi inférieure horizontale 650.

En figure 30 est représenté un dispositif scarificateur 66 prévu pour l'aération de la litière. Ce dispositif 66 comprend une paroi horizontale 660 portée par des pieds, dotée d'une empreinte d'assemblage, et au moins un rouleau scarificateur 661 porté par deux bras 662 articulés à la paroi 660, le rouleau scarificateur étant entraîné en rotation par un organe moteur 663. Pour limiter le basculement vers le bas du rouleau scarificateur 661, chaque bras support 662 est doté d'une béquille formant butée prévue pour venir en appui contre le pied correspondant.

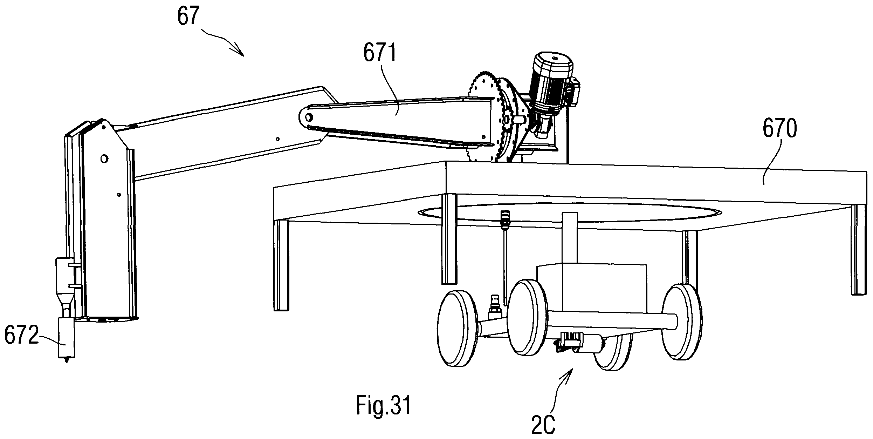

En figure 31 est représenté un dispositif de carottage 67 porté par un module 6c tel que précédemment décrit.
Le dispositif de carottage comprend une paroi horizontale 670 portée par des pieds, dotée d'une empreinte d'assemblage, un bras robotisé fixé à la paroi horizontale 670 et une carotteuse 672 porté par le bras robotisé. Le bras robotisé comprend une tourelle et plusieurs segments de bras motorisés articulés les uns aux autres. Le segment proximal de bras est porté par la tourelle. Le segment distal de bras porte en extrémité libre la carotteuse 672.
Ce dispositif de carottage est prévu pour prélever des carottes dans la litière afin d'analyse.

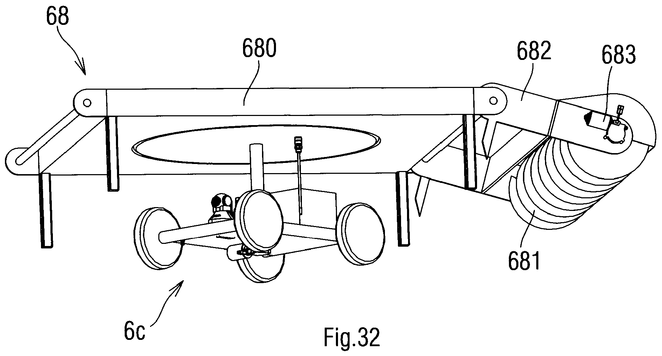

En figure 32 est représenté un dispositif 68 porté par un module 6c tel que précédemment décrit. Ce dispositif est apte à rassembler sur un lieu de consommation, l'ensilage éparpillé par les animaux. Ce dispositif comprend une paroi horizontale 680 portée par des pieds, dotée d'une empreinte d'assemblage et au moins une vis sans fin 681 portée par deux bras 682 articulé à la paroi 680. La vis sans fin est accouplée à un moteur d'entraînement en rotation 683. La vis sans fin 681 est transversale au sens de progression du dispositif face au lieu de consommation de l'ensilage. La vis est amenée au contact du sol et par rotation de cette dernière, l'ensilage est repoussé vers le lieu ou l'aire de consommation.

On pourra également prévoir un module télécommandé d'évolution au sol doté d'un canon d'épandage et d'une réserve de faible capacité en produit d'épandage prévue pour être ravitaillée par un moyen de délivrance de produit, transporté par l'unité de surveillance 1 et raccordé par une conduite souple à un serveur externe au local d'élevage.

A l'ensemble de surveillance et d'intervention tel que décrit pourra être associée une unité transportable d'étalonnage permettant l'étalonnage des différents capteurs tant du local que de l'unité 1 de surveillance. Avec une telle unité il sera possible d'étalonner les capteurs de différents locaux d'élevage et différentes unités de surveillance.

On a décrit précédemment un module d'épandage 2d de produits de litière séparable de l'unité de surveillance 1, mais en variante, ce module est fixé de manière inamovible à ladite unité de surveillance 1.

De plus les différents modules présenteront des moyens d'attelage verrouillables-déverrouillables pour être attelés à d'autres modules.

L'unité de surveillance 1 selon l'invention sera avantageusement équipée de moyens de détection de présence humaine dans le local d'élevage. De tels moyens pourront être constitués par une ou des caméras couplées à des logiciels d'intelligence artificielle aptes à discriminer une présence humaine, des animaux d'élevage. En cas de détection d'une telle présence, le ou les modules en mouvement seront placés à l'arrêt et désactivés.

Une telle détection de présence pourra déclencher une alarme, de cette manière, toute intrusion non autorisée dans le local sera signalée à l'éleveur.

L'ensemble de surveillance selon l'invention présente l'avantage de pouvoir interagir avec les animaux et avec les personnes pénétrant dans le local d'élevage. De plus cet ensemble d'élevage sera apte à agir sans retard sur le système de gestion d'ambiance du bâtiment pour corriger un défaut d'ambiance ou autre. Typiquement un tel système comprend non limitativement un ou plusieurs ventilateurs, un ou plusieurs extracteurs d'air, un ou plusieurs appareils de désinfection d'air, un ou plusieurs appareils de filtration d'air.

Grâce à la manutention des produits notamment par voie pneumatique plusieurs produits peuvent être distribués simultanément soit par le canon 23, la lance 26 ou d'autre élément d'épandage porté par le module 2g. Ces produits peuvent être des solides, des liquides ou des gaz ou un mélange de ces derniers. Certains gaz utilisés pourront présenter des propriétés curatives ou des propriétés désinfectantes. S'agissant de ces derniers gaz ils pourront notamment être utilisés pour la désinfection du local d'élevage et des équipements de ce dernier ainsi que pour la désinfection des conduites de transport des produits nourriciers.
Grâce aux caméras et aux images données par ces dernières, les modules télécommandés pourront être pilotés et contrôlés à distance par l'unité de traitement 3. Grâce aux notamment aux caméras il devient possible d'identifier les problèmes que peut présenter le troupeau dans son ensemble ou un groupe d'animaux ou un animal en particulier. Des animaux qui restent constamment debout peut être la conséquence d'une litière localement humide. Auquel cas, l'ensemble de surveillance et d'intervention selon l'invention, sera apte à mesurer la température de la litière, éventuellement son degré d'humidité et commander et piloter une opération d'épandage de produits asséchants ou de litière fraiche.
De même, grâce aux caméras et aux images données par ces dernières et analysées, les opérations de distribution de ration alimentaires dans les nourrisseurs pourront s'effectuer en temps masqué. Plus précisément pendant l'alimentation en produit nourricier d'un nourrisseur, il sera procédé à l'analyse du besoin en produit nourricier d'un autre nourrisseur.

Quel que soit le problème détecté l'ensemble de surveillance et d'intervention alertera l'éleveur par tous moyens connus. L'éleveur pourra alors s'il le souhaite piloter les interventions requises ou interdire toute intervention.

L'ensemble de surveillance est également apte à l'examen des fèces des animaux et d'évaluer leur état de santé.

Enfin l'ensemble de surveillance et d'intervention, intègre des fonctions d'autodiagnostic et est apte à la surveillance du bon fonctionnement des équipements du local d'élevage.

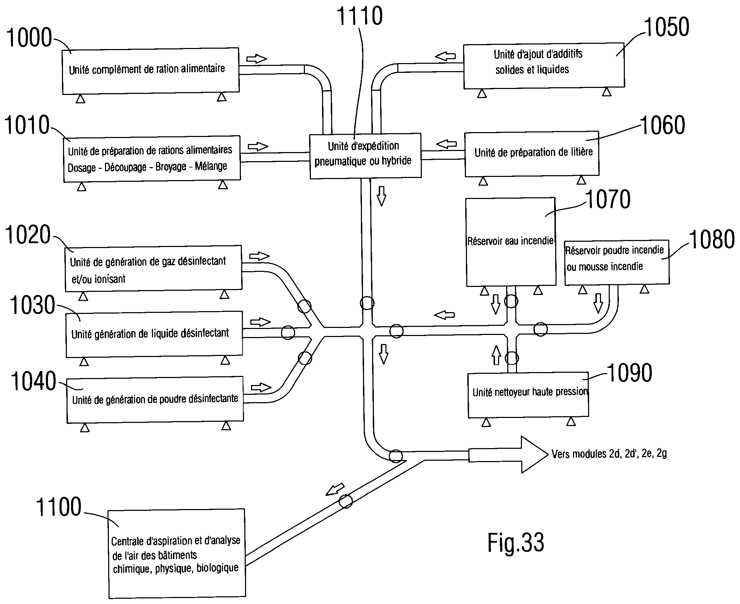

L'ensemble de surveillance tel que décrit comporte avantageusement plusieurs unités fonctionnelles aptes à alimenter en produits solides gazeux ou liquides les modules d'interventions 2d, 2d', 2e, 2g et à analyser notamment l'air ambiant du local et les émanations produites dans le local notamment par la litière les fèces et autres. Comme on peut le voir en figure 33 les diverses unités fonctionnelles sont chacune installées sur un moyen de pesage et sont organisées autour de conduites de distribution ou d'aspiration avec vannes d'arrêt. On peut voir sur la figure 33 l'ensemble de surveillance comporte une unité 1000 apte à délivrer des compléments de ration alimentaire, une unité 1010 de préparation de rations alimentaires assurant des fonctions de dosage, découpage, broyage et mélange, une unité 1020 de génération de gaz désinfectant et/ou ionisant, une unité 1030 de génération de liquide désinfectant, une unité 1040 de génération de poudre désinfectante, une unité 1050 d'ajout d'additifs solides et liquides une unité 1060 de préparation de litière, une unité 1070 formant réserve pour eau de lutte contre l'incendie, une unité 1080 formant réservoir de poudre ou de mousse le lutte contre l'incendie, une unité de nettoyage haute pression 1090. On observe également que l'ensemble de surveillance comporte une unité 1100 constituée par une centrale d'aspiration et d'analyse, chimique, physique et biologique de l'air des bâtiments et une unité 1110 d'expédition ou de propulsion vers l'un des modules actifs de distribution 2d, 2d', 2e, 2g des produits délivrés par les unités 1000, 1010, 1050 et 1060, l'unité 1110 pour la propulsion de ces produits pouvant faire appel aux techniques de transport par voie pneumatique ou à toute autre technique.

Il y a lieu de noter qu'au moins la centrale 1100 peut être commune à plusieurs ensembles de surveillance et d'intervention.

Il va de soi que la présente invention peut recevoir tous aménagements et variantes du domaine des équivalents techniques sans pour autant sortir du cadre du présent brevet tel que défini par les revendications ci-après. De même il va de soi que la présente invention telle que définie dans les revendications n'est pas limitée au domaine de l'élevage et qu'elle peut être utilisée dans des locaux industriels pour mener des tâches de surveillance et d'intervention.

## Revendications

1. Ensemble de surveillance et d'intervention pour local d'élevage comprenant :
- une unité de surveillance (1) mobile dotée de moyens de surveillance du local d'élevage et des animaux y résidant, les coordonnées géographiques de ladite unité dans le local étant déterminables par rapport à une origine,
- au moins un module (2a, 2b, 2c, 2d, 2e, 2f, 2g, 2h) d'intervention, mobile, apte à être entraîné et piloté par ladite unité de surveillance (1), ledit module d'intervention, au repos étant installé sur une aire de stockage, dans lequel
l'unité de surveillance (1) est suspendue à un rail de guidage (4) installé au-dessus du sol, ladite unité de surveillance comportant un moyen d'entraînement le long du rail de guidage (4) et un moyen indicateur de sa position le long du rail de guidage (4) par rapport à une référence ou origine attachée mécaniquement à ce rail (4),
ledit ensemble de surveillance et d'intervention étant **caractérisé en ce que** ladite unité de surveillance (1) et ledit module d'intervention (2a, 2b, 2c, 2d, 2e, 2f, 2g, 2h) comportent tous deux des moyens mécaniques d'attelage, coopérants, de liaison l'un à l'autre, verrouillables, déverrouillables, ladite unité de surveillance étant apte à surveiller en permanence le local et les animaux, sans pour autant recevoir en attelage le ou l'un des modules d'intervention.

2. Ensemble selon la revendication 1 **caractérisé en ce qu'**il comporte une unité (3) de traitement, en relation de communication avec l'unité de surveillance (1), ladite unité de traitement (3) étant apte à recevoir des données et signaux émis par au moins les moyens de surveillance que comporte l'unité de surveillance, à analyser ces données et signaux, à établir un diagnostic et le cas échéant à commander l'unité de surveillance pour piloter une intervention.

3. Ensemble selon l'une des revendications 1 ou 2, **caractérisé en ce que** le rail de guidage (4) est formé d'un profilé tubulaire de section droite quadrangulaire et comporte une fente longitudinale (40) ménagée dans sa paroi inférieure, laquelle, de part et d'autre de la fente (40) forme deux pistes de guidage (41).

4. Ensemble selon la revendication précédente, **caractérisé en ce que** :
- l'unité de surveillance (1) comprend un châssis (10) sous forme de carter auquel sont fixés des moyens (11) de guidage le long du rail prenant appui sur les pistes de guidage (41),
- ledit moyen d'entraînement est formé par une roue d'entraînement (12) accouplée à un organe moteur (13) d'entraînement fixé au châssis (10), ladite roue d'entraînement (12) étant en pression par sa bande de roulement, contre la face externe de la paroi inférieure du rail de guidage (4),
- ladite roue d'entraînement est formée d'un disque central métallique (120) enserré entre deux flasques latéraux (121) dont la bordure périphérique forme la bande de roulement,
- le disque central (120) est de plus grand diamètre que le diamètre des flasques latéraux (121) et pénètre dans le rail de guidage (4) par passage au travers de la fente (40).

5. Ensemble selon la revendication 2, **caractérisé en ce que** l'un au moins moyen de surveillance de l'unité de surveillance (1) comprend au moins un dispositif (5) d'acquisition d'images apte à donner des images du local et des animaux y résidant, l'unité de traitement (3) comportant des moyens d'analyse d'images.

6. Ensemble selon l'une des revendications 2 ou 5, **caractérisé en ce que** lesdits moyens de surveillance sont constitués par un ou plusieurs moyens choisis parmi : un capteur du taux d'ammoniaque, un capteur du taux de gaz carbonique, un capteur du taux d'oxygène, un capteur de température, un capteur d'hygrométrie, un luxmètre, un anémomètre, un capteur du type boule noire, un capteur de poussières, un microphone, un dispositif d'acquisition des sons, un capteur d'infrasons.

7. Ensemble selon la revendication 4, **caractérisé en ce que** le moyen d'attelage que comporte l'unité de surveillance (1) est formé d'une perche (15) extensible, portée par le châssis (10) et actionnée en déploiement ou en rétraction par un mécanisme moteur d'actionnement (16), cette perche (15), comportant en extrémité inférieure, des organes d'ablocage de module (2) prévus pour coopérer en ablocage avec des organes d'ablocage complémentaires portés par le ou chaque module (2).

8. Ensemble selon la revendication précédente, **caractérisé en ce que** les organes d'ablocage sont constitués d'une part d'un crochet basculant (155) articulé au châssis (10) de l'unité de surveillance (1) et associé à un organe moteur de manoeuvre (156) porté par ladite unité de surveillance 1 et d'autre part d'un anneau d'attelage (22) porté par le module d'intervention (2) et prévu pour recevoir en emboîtement de forme le crochet basculant (155), ledit module d'intervention (2) étant suspendu, selon qu'il est en utilisation ou au repos soit au rail de guidage (4) soit à une zone de stockage (45) attenante au rail (4), ladite zone de stockage étant en relation de communication avec le rail (4) par l'entremise d'un aiguillage (46).

9. Ensemble selon la revendication 7, **caractérisé en ce que** l'unité de surveillance (1) comporte des jauges de contrainte (17) installées entre le châssis (10) de ladite unité (1) et la perche verticale (15) extensible.

10. Ensemble selon l'une quelconque des revendications précédentes, **caractérisé en ce qu'**il comporte des modules de pesage (2a, 2b, 2c) dotés chacun d'un plateau rigide horizontal (28a, 28b, 28c) et que le plateau de chaque module de pesage reçoit sur sa face inférieure au moins un capteur de température (C1), au moins un capteur d'hygrométrie (C2), au moins un capteur d'analyse de composition chimique de la litière et des fèces.

11. Ensemble selon l'une quelconque des revendications précédentes, **caractérisé en ce qu'**il comporte un module d'épandage (2d, 2d') alimenté en produits par une conduite souple et que ce module d'épandage comprend un moyen (23) d'épandage et de distribution formé par un canon porté par une conduite d'alimentation (24) rigide, formée de deux segments de conduite amont (240) et aval (241), réunis l'un à l'autre par un joint tournant (242), ledit canon (23) étant connecté au segment aval de conduite (24) par un manchon élastiquement déformable (230), un premier organe moteur (231) étant installé entre le canon (23) et le segment aval (241) de conduite en étant couplé cinématiquement à ces derniers, et un second organe moteur (243) étant accouplé respectivement aux deux segments de conduite (240, 241) et ce de part et d'autre du joint tournant (242).

12. Ensemble selon la revendication 11, **caractérisé en ce que** le canon (23) d'épandage et de distribution est équipé d'une caméra thermique (244).

13. Ensemble selon la revendication 11 ou la revendication 12, **caractérisé en ce que** le canon (23) reçoit au niveau de sa bouche de sortie un déflecteur articulé (255) dont l'inclinaison face à la bouche de sortie est ajustable par un organe moteur (256).

14. Ensemble selon la revendication 13, **caractérisé par** :
- des détecteurs du type infrarouge disposés sur la conduite souple d'alimentation en produits, ces dits détecteurs étant aptes à détecter des corps enflammés ou à température élevée transportés dans ladite conduite afin de commander la manoeuvre du déflecteur dans le sens de la fermeture du canon dans le cas d'une détection,
- et/ou par un détecteur acoustique installé sur la conduite souple d'alimentation en produits, apte à détecter les sons produits par le passage de corps étrangers afin de manoeuvrer le déflecteur vers le bas pour renvoyer ces corps vers un réceptacle porté par le canon sous sa bouche de délivrance.

15. Ensemble selon l'une quelconque des revendications 11 à 14, **caractérisé par** un moyen de dépoussiérage installé entre le segment amont de conduite rigide (24) et la conduite souple d'alimentation en produits.

16. Ensemble selon l'une quelconque des revendications précédentes, **caractérisé par** un module additionnel d'épandage comprenant un chariot de suspension au rail de guidage (4) auquel est solidarisée, par l'intermédiaire d'une conduite rigide, l'extrémité supérieure d'une lance télescopique (26) orientable en azimut et inclinaison dotée de moyens moteurs de rétraction et de déploiement, ladite lance comportant un tronçon de lance distal et un tronçon de lance proximal.

17. Ensemble selon l'une quelconque des revendications précédentes, **caractérisé par** ce qu'il comprend en outre au moins un module télécommandé (6a, 6b, 6c) automobile, prévu pour évoluer sur le sol du local d'élevage, ledit module (6a, 6b, 6c) comprenant un châssis monté sur des roues d'appui au sol.

18. Ensemble selon la revendication précédente, **caractérisé en ce que** l'un (6a), (6b) des modules télécommandés automobiles est doté de pinces de préhension (60) pour le ramassage des animaux morts ou blessés, ou est affecté au ramassage des oeufs et comprend deux bras de rabattage formant un Vé en zone avant et une plateforme de réception des oeufs formée entre les bras.

19. Ensemble selon la revendication 17, **caractérisé en ce que** l'un (6c) des modules télécommandés est doté d'un canon d'épandage et d'une réserve en produit d'épandage prévue pour être ravitaillée par un moyen de délivrance de produit, transporté par l'unité de surveillance 1 et raccordé par une conduite souple à un serveur externe au local d'élevage.

20. Ensemble selon la revendication 16, **caractérisé en ce que** la lance (26) est connectée à un bipasse (267), commandé par l'unité de traitement (3), dont une voie est connectée à un serveur de produits et dont l'autre voie est connectée à une pompe à vide (268) en relation de communication avec un analyseur de gaz.

21. Ensemble selon la revendication 11, **caractérisé en ce que** le canon d'épandage 23 est vertical.

22. Ensemble selon l'une quelconque des revendications précédentes, **caractérisé par** une perche (9) télescopique prévue pour recevoir différents outils amovibles.

23. Ensemble selon l'une quelconque des revendications précédentes, **caractérisé en ce qu'**il comprend plusieurs unités fonctionnelles aptes à alimenter en produits solides gazeux ou liquides les modules d'interventions (2d, 2d', 2e, 2g), à analyser notamment l'air ambiant du local et les émanations produites dans ledit local et qu'il comporte une unité (1000) apte à délivrer des compléments de ration alimentaire, une unité (1010) de préparation de rations alimentaires assurant des fonctions de dosage, découpage, broyage et mélange, une unité (1020) de génération de gaz désinfectant et/ou ionisant, une unité (1030) de génération de liquide désinfectant, une unité (1040) de génération de poudre désinfectante, une unité (1050) d'ajout d'additifs solides et liquides, une unité (1060) de préparation de litière, une unité (1070) formant réserve pour eau de lutte contre l'incendie, une unité (1080) formant réservoir de poudre ou de mousse le lutte contre l'incendie, une unité de nettoyage haute pression (1090), une unité (1100) constituée par une centrale d'aspiration et d'analyse, chimique, physique et biologique de l'air des bâtiments et des émanations et une unité (1110) d'expédition ou de propulsion vers l'un des modules actifs de distribution (2d, 2d', 2e, 2g) des produits délivrés par les unités (1000, 1010, 1050 et 1060) .

24. Ensemble selon l'une quelconque des revendications précédentes, **caractérisé en ce que** l'unité de surveillance (1) est tractée par un câble formant une boucle sans fin, tendue entre une poulie menée et une poulie menante accouplée à un organe moteur d'entraînement en rotation.

## Patentansprüche

1. Überwachungs- und Eingreifsystem für Viehzuchträume, umfassend:
- eine bewegliche Überwachungseinheit (1), die mit Mitteln zur Überwachung des Viehzuchtraums und der dort untergebrachten Tiere ausgestattet ist, wobei die geografischen Koordinaten der Einheit innerhalb des Raums gegenüber einem Ursprung bestimmt werden können,
- mindestens ein Eingreifmodul (2a, 2b, 2c, 2d, 2e, 2f, 2g, 2h), das beweglich ist und von der Überwachungseinheit (1) angetrieben und gesteuert werden kann, wobei das Eingreifmodul sich in der Ruhestellung auf einer Abstellfläche befindet, wobei die Überwachungseinheit (1) an einer Führungsschiene (4) aufgehängt ist, welche oberhalb des Bodens angebracht ist, wobei die Überwachungseinheit ein Mittel zum Antrieb entlang der Führungsschiene (4) und ein Mittel zum Anzeigen seiner Position entlang der Führungsschiene (4) gegenüber einem Bezugspunkt oder Ursprung aufweist, welcher mechanisch an der Schiene (4) befestigt ist, wobei das Überwachungs- und Eingreifsystem **dadurch gekennzeichnet ist, dass** die Überwachungseinheit (1) und das Eingreifmodul (2a, 2b, 2c, 2d, 2e, 2f, 2g, 2h) beide mechanische Anhängemittel aufweisen, die zusammenwirken, miteinander verbunden sind, verriegelt und entriegelt werden können, wobei die Überwachungseinheit dazu befähigt ist, den Raum und die Tiere ständig zu überwachen, ohne dass das oder eines der Eingreifmodule daran angehängt sind.

2. System nach Anspruch 1, **dadurch gekennzeichnet, dass** es eine Behandlungseinheit (3) aufweist, die in einer Verbindungsbeziehung mit der Überwachungseinheit (1) steht, wobei die Behandlungseinheit (3) dazu befähigt ist, Daten und Signale zu empfangen, wie sie zumindest von den Überwachungsmittel ausgesendet werden, welche die Überwachungseinheit aufweist, diese Daten und Signale auszuwerten, eine Diagnose zu erstellen und gegebenenfalls einen Befehl an die Überwachungseinheit auszugeben, um einen Eingriff zu steuern.

3. System nach einem der Ansprüche 1 oder 2, **dadurch gekennzeichnet, dass** die Führungsschiene (4) aus einem röhrenförmigen Profilstück mit quadratischem Querschnitt gebildet ist und einen längsgerichteten Spalt (40) aufweist, welcher in dessen unterseitiger Wand ausgespart ist, wobei er beiderseits des Spalts (40) zwei Führungswege (41) bildet.

4. System nach dem vorhergehenden Anspruch, **dadurch gekennzeichnet, dass** :
- die Überwachungseinheit (1) ein Gestell (10) in Form eines Gehäuses umfasst, an welchem Mittel (11) zur Führung entlang der Schiene befestigt sind, die auf den Führungswegen (41) aufliegen,
- das Antriebsmittel von einem Antriebsrad (12) gebildet wird, welches mit einem Antriebsmotororgan (13) gekuppelt ist, das an dem Gestell (10) befestigt ist, wobei das Antriebsrad (12) mit seinem Laufstreifen gegen die Außenseite der unterseitigen Wand der Führungsschiene (4) drückt,
- das Antriebsrad von einer metallischen Mittelscheibe (120) gebildet wird, die zwischen zwei seitlichen Flanschen (121) eingeklemmt ist, deren umlaufender Rand den Laufstreifen bildet,
- die Mittelscheibe (120) einen Durchmesser hat, der größer als der Durchmesser der seitlichen Flansche (121) ist, und in die Führungsschiene vordringt (4), indem sie durch den Spalt (40) gelangt.

5. System nach Anspruch 2, **dadurch gekennzeichnet, dass** zumindest ein Überwachungsmittel der Überwachungseinheit (1) mindestens eine Bildaufzeichnungsvorrichtung (5) umfasst, die dazu befähigt ist, Bilder von dem Raum und den dort untergebrachten Tieren bereitzustellen, wobei die Behandlungseinheit (3) Bildauswertungsmittel aufweist.

6. System nach einem der Ansprüche 2 bis 5, **dadurch gekennzeichnet, dass** die Überwachungsmittel aus einem oder mehreren Mitteln bestehen, die aus den folgenden ausgewählt sind: einem Sensor des Ammoniakgehalts, einem Sensor des Kohlendioxidgehalts, einem Sensor des Sauerstoffgehalts, einem Temperatursensor, einem Luftfeuchtigkeitssensor, einem Lux-Messgerät, einem Windmesser, einem Sensor der Bauart mit schwarzer Kugel, einem Staubsensor, einem Mikrophon, einer Tonaufnahmevorrichtung, einem Ultraschallsensor.

7. System nach Anspruch 4, **dadurch gekennzeichnet, dass** das Anhängemittel, mit welchem die Überwachungseinheit (1) versehen ist, von einer ausziehbaren Stange (15) gebildet wird, die von dem Gestell (10) getragen wird und von einem Betätigungsmotormechanismus (16) derart betätigt wird, dass sie ausfährt oder sich zurückzieht, wobei diese Stange (15) an ihrem unteren Ende Organe zum Einspannen von Modulen (2) aufweist, die dafür vorgesehen sind, derart mit komplementären Einspannorganen zusammenzuwirken, mit welchen das oder jedes Modul (2) versehen ist, dass ein Einspannen erzielt wird.

8. System nach dem vorhergehenden Anspruch, **dadurch gekennzeichnet, dass** die Einspannorgane einerseits aus einem Kipphaken (155), welcher am Gestell (10) der Überwachungseinheit (1) angelenkt ist und mit einem Stellmotororgan (156) in Verbindung steht, mit welchem die Überwachungseinheit 1 versehen ist, und andererseits aus einem Anhängering (22) bestehen, mit welchem das Eingreifmodul (2) versehen ist und welcher dafür vorgesehen ist, den Kipphaken (155) formschlüssig aufzunehmen, wobei das Eingreifmodul (2), je nachdem, ob es in Gebrauch oder in Ruhestellung ist, entweder an der Führungsschiene (4) oder an einem Abstellbereich (45) aufgehängt ist, welcher an die Schiene (4) angrenzt, wobei der Abstellbereich über eine Weiche (46) mit der Schiene (4) in Verbindung steht.

9. System nach Anspruch 7, **dadurch gekennzeichnet, dass** die Überwachungseinheit (1) Belastungsmesseinrichtungen (17) aufweist, die zwischen dem Gestell (10) der Einheit (1) und der ausziehbaren vertikalen Stange (15) angebracht sind.

10. System nach einem beliebigen der vorhergehenden Ansprüche, **dadurch gekennzeichnet, dass** es Wägemodule (2a, 2b, 2c) aufweist, die jeweils mit einer horizontalen steifen Platte (28a, 28b, 28c) versehen sind, und dass die Platte jedes der Wägemodule an seiner Unterseite mindestens einen Temperatursensor (C1), mindestens einen Luftfeuchtigkeitssensor (C2), mindestens einen Sensor zur Bestimmung der chemischen Zusammensetzung der Einstreu und der Fäkalien aufnimmt.

11. System nach einem beliebigen der vorhergehenden Ansprüche, **dadurch gekennzeichnet, dass** es ein Ausbringmodul (2d, 2d') aufweist, das über eine biegsame Leitung mit Produkten gespeist wird, und dass dieses Ausbringmodul ein Ausbring- und Verteilungsmittel (23) umfasst, welches von einem Rohr gebildet wird, mit welchem eine steife Zufuhrleitung (24) versehen ist, wobei diese aus zwei stromaufwärts gelegenen (240) bzw. stromabwärts gelegenen (241) Leitungssegmenten gebildet ist, welche über eine Drehkupplung (242) zusammengefügt sind, wobei das Rohr (23) über eine elastisch verformbare Muffe (230) mit dem stromabwärts gelegenen Leitungssegment (24) verbunden ist, wobei es erstes Motororgan (231) zwischen dem Rohr (23) und dem stromabwärts gelegenen Leitungssegment (241) angebracht ist, wobei es kinematisch mit den letzteren gekuppelt ist, und ein zweites Motororgan (243) jeweils mit den beiden Leitungssegmenten (240, 241) gekuppelt ist, und zwar beiderseits der Drehkupplung (242).

12. System nach Anspruch 11, **dadurch gekennzeichnet, dass** das Ausbring- und Verteilungsrohr (23) mit einer Wärmebildkamera (244) ausgerüstet ist.

13. System nach Anspruch 11 oder Anspruch 12, **dadurch gekennzeichnet, dass** das Rohr (23) an seiner Austrittsmündung eine angelenkte Ablenkplatte (255) aufnimmt, deren Neigung gegenüber der Austrittsöffnung durch ein Motororgan (256) eingestellt werden kann.

14. System nach Anspruch 13, **gekennzeichnet durch**:
- Detektoren vom Typ Infrarot, die an der biegsamen Leitung zum Einspeisen von Produkten angeordnet sind, wobei diese Detektoren dazu befähigt sind, entflammte oder eine erhöhte Temperatur aufweisende Körper zu detektieren, welche in der Leitung befördert werden, um im Falle einer solchen Detektion den Befehl auszugeben, dass die Ablenkplatte derart eingestellt wird, dass das Rohr verschlossen wird,
- und/oder einen Schalldetektor, der an der biegsamen Leitung zum Einspeisen von Produkten angebracht ist, wobei er dazu befähigt ist, Geräusche zu detektieren, wie sie beim Durchgang von Fremdkörpern erzeugt werden, um die Ablenkplatte nach unten zu stellen, sodass diese Körper in einen Behälter geschickt werden, mit welchem das Rohr unter seiner Abgabemündung versehen ist.

15. System nach einem beliebigen der Ansprüche 11 bis 14, **gekennzeichnet durch** ein Entstaubungsmittel, das zwischen dem stromaufwärts gelegenen Segment der steifen Leitung (24) und der biegsamen Leitung zum Einspeisen von Produkten angebracht ist.

16. System nach einem beliebigen der vorhergehenden Ansprüche, **gekennzeichnet durch** ein zusätzliches Ausbringmodul, das einen Schlitten zum Aufhängen an der Führungsschiene (4) umfasst, mit welchem über eine steife Leitung das obere Ende einer teleskopartigen Lanze (26) fest verbunden ist, welche anhand des Azimutwinkels und der Neigung ausgerichtet werden kann; wobei sie mit Motormitteln zum Einziehen und zum Ausfahren ausgestattet ist, wobei die Lanze einen distalen Lanzenabschnitt und einen proximalen Lanzenabschnitt aufweist.

17. System nach einem beliebigen der vorhergehenden Ansprüche, **dadurch gekennzeichnet, dass** es darüber hinaus mindestens ein selbstfahrendes ferngesteuertes Modul (6a, 6b, 6c) umfasst, welches dafür vorgesehen ist, sich über den Boden des Tierzuchtraums zu bewegen, wobei das Modul (6a, 6b, 6c) ein Gestell umfasst, das auf Rädern angebracht ist, welche sich auf dem Boden abstützen.

18. System nach dem vorhergehenden Anspruch, **dadurch gekennzeichnet, dass** eines (6a, 6b) der selbstfahrenden ferngesteuerten Module mit Greifzangen (60) versehen ist, um tote oder verletzte Tiere einzusammeln, oder dazu verwendet wird, Eier einzusammeln, und zwei Zuführungsarme im vorderen Bereich, die ein V bilden, sowie eine Plattform zur Aufnahme der Eier umfasst, welche zwischen den Armen ausgebildet ist.

19. System nach Anspruch 17, **dadurch gekennzeichnet, dass** eines (6c) der ferngesteuerten Module mit einem Ausbringrohr und einem Vorrat an auszubringendem Produkt versehen ist, wobei dieser dafür vorgesehen ist, durch ein Produktabgabemittel aufgefüllt zu werden, von der Überwachungseinheit 1 befördert wird und über eine biegsame Leitung an eine Bedienungseinrichtung außerhalb des Viehzuchtraums angeschlossen ist.

20. System nach Anspruch 16, **dadurch gekennzeichnet, dass** die Lanze (26) mit einem Zweiwegeventil (267) verbunden ist, welches Befehle von der Behandlungseinheit (3) erhält, wobei einer seiner Wege mit einer Bedienungseinrichtung für Produkte verbunden ist und wobei sein anderer Weg mit einem Vakuumpumpe (268) verbunden ist, die in Verbindungsbeziehung mit einem Gasuntersuchungsgerät steht.

21. System nach Anspruch 11, **dadurch gekennzeichnet, dass** das Ausbringrohr 23 vertikal ist.

22. System nach einem beliebigen der vorhergehenden Ansprüche, **gekennzeichnet durch** eine teleskopartige Stange (9), die dafür vorgesehen ist, verschiedenartige Werkzeuge lösbar aufzunehmen.

23. System nach einem beliebigen der vorhergehenden Ansprüche, **dadurch gekennzeichnet, dass** es mehrere Funktionseinheiten umfasst, die dazu befähigt sind, den Eingreifmodulen (2d, 2d', 2e, 2g) feste, gasförmige oder flüssige Produkte zuzuführen, insbesondere die Raumluft und die Ausscheidungen, welche in dem Raum anfallen, zu untersuchen, und dass es eine Einheit (1000), die dazu befähigt ist, Ergänzungen der Futtermittelration abzugeben, eine Einheit (1010) zur Zubereitung von Futtermittelrationen, welche die Aufgaben der Dosierung, des Zuschneidens, des Zerkleinern und Vermischens übernimmt, eine Einheit (1020) zum Erzeugen von desinfizierendem und/oder ionisierendem Gas, eine Einheit (1030) zum Erzeugen von desinfizierender Flüssigkeit, eine Einheit (1040) zum Erzeugen von desinfizierendem Pulver, eine Einheit (1050) zum Hinzufügen fester und flüssiger Zusatzstoffe, eine Einheit (1060) zur Herstellen von Einstreu, eine Einheit (1070), die einen Wasservorrat für die Brandbekämpfung bildet, eine Einheit (1080), die einen Pulver- oder Schaumvorrat für die Brandbekämpfung bildet, eine Hochdruckreinigungseinheit (1090), eine Einheit (1100), die aus einer Zentrale zum Ansaugen und zum chemischen, physikalischen und biologischen Untersuchen der Gebäude- und Ausscheidungsluft besteht, und eine Einheit (1110) zum Aussenden oder zum Treiben der Produkte, welche von den Einheiten (1000, 1010, 1050 und 1060) abgegeben werden, zu einem der aktiven Verteilungsmodule (2d, 2d', 2e, 2g), aufweist.

24. System nach einem beliebigen der vorhergehenden Ansprüche, **dadurch gekennzeichnet, dass** die Überwachungseinheit (1) von einem Seil gezogen wird, das eine Endlosschleife bildet, die zwischen einer geführten Umlenkrolle und einer führenden Umlenkrolle gespannt ist, welche mit einem Motororgan gekuppelt ist, das sie in eine Drehbewegung versetzt.

## Claims

1. A monitoring and intervening assembly for rearing premises, **characterized in that** it comprises:
- a movable monitoring unit (1) equipped with means for monitoring the rearing premises and the animals resident therein, the geographical coordinates of said unit in the premises being determinable with respect to an origin,
- at least one movable intervening module (2a, 2b, 2c, 2d, 2e, 2f, 2g, 2h) which is capable of being driven and controlled by said monitoring unit (1), said intervening module, when inoperative, being installed in a storage area,
wherein the monitoring unit (1) is suspended on a guide rail (4) installed above the ground, said monitoring unit (1) comprising means for driving along the guide rail (4) and means for indicating its position along the guide rail (4) with respect to a reference or origin mechanically attached to this rail (4)
said monitoring and intervening assembly being **characterized in that** said monitoring unit (1) and said intervening module (2a, 2b, 2c, 2d, 2e, 2f, 2g, 2h) both comprise cooperating mechanical coupling means for linking one to the other and which are lockable and unlockable, said monitoring unit being capable of continuously monitoring the premises and the animals without, however, being coupled to the or one of the intervening modules.

2. The assembly according to Claim 1, **characterized in that** it comprises a processing unit (3) in communication with the monitoring unit (1), said processing unit (3) being capable of receiving data and signals emitted by at least the monitoring means comprised in the monitoring unit, of analyzing said data and signals, of establishing a diagnosis and, if appropriate, of operating the monitoring unit in order to manage an intervention.

3. The assembly according to Claim 1 or Claim 2, **characterized in that** the guide rail (4) is formed by a tubular profile with a quadrangular cross section and comprises a longitudinal slot (40) provided in its lower wall which forms two guide tracks (41) either side of the slot (40).

4. The assembly according to the preceding claim, **characterized in that**:
- the monitoring unit (1) comprises a chassis (10) in the form of a dolly to which the guide means (11) are fixed along the rail bearing on the guide tracks (41),
- said drive means is formed by a drive wheel (12) coupled to a drive motor means (13) attached to the chassis (10), said drive wheel (12) pressing via its tread against the outer face of the lower wall of the guide rail (4),
- said drive wheel is formed by a central metal disk (120) clamped between two lateral flanges (121) the peripheral border of which forms the tread,
- the central disk (120) has a larger diameter than the diameter of the lateral flanges (121) and penetrates into the guide rail (4) by passing through the slot (40).

5. The assembly according to Claim 2, **characterized in that** said the at least one monitoring means of the monitoring unit (1) comprises at least one image acquisition device (5) which can provide images of the premises and the animals resident therein, the processing unit (3) comprising image analysis means.

6. The assembly according to Claim 1 or Claim 5, **characterized in that** said monitoring means are constituted by one or more means selected from: a sensor for the quantity of ammonia, a sensor for the quantity of carbon dioxide, a sensor for the quantity of oxygen, a temperature sensor, a moisture sensor, a light meter, an anemometer, a black ball type sensor, a sensor for dust, a microphone, a sound acquisition device, an infrasound sensor.

7. The assembly according to Claim 4, **characterized in that** the coupling means comprised in the unit (1) is formed by an extensible pole (15) carried by the chassis (10) and actuated in deployment or in retraction by an actuating motor mechanism (16), this pole (15) comprising, at its lower end, means for docking the module (2) provided for cooperation by docking with complementary docking means carried by the or each module (2).

8. The assembly according to the preceding claim, **characterized in that** the docking means are constituted on the one hand by a swivel hook (155) articulated on the chassis (10) of the monitoring unit (1) and associated with a maneuvering motor means (156) carried by said monitoring unit (1) and on the other hand by a coupling ring (22) carried by the intervening module (2) and provided in order to receive the swivel hook (155) by form fitting, said intervening module (2) being suspended such that depending on whether it is in use or inoperative, it is either on the guide rail (4) or at a storage zone (45) adjacent to the rail (4), said storage zone being in communication with the rail (4) via a junction point (46).

9. The assembly according to Claim 7, **characterized in that** the monitoring unit (1) comprises strain gauges (17) installed between the chassis (10) of said unit (1) and the extensible vertical pole (15).

10. The assembly according to anyone of the preceding claims, **characterized in that** it comprises weighing modules (2a, 2b, 2c) each provided with a rigid horizontal plate (28a, 28b, 28c) and **in that** the lower face of the plate of each weighing module receives at least one temperature sensor (C1), at least one moisture sensor (C2), and at least one sensor for analyzing the chemical composition of litter and faeces.

11. The assembly according to anyone of the preceding claims, **characterized in that** the it comprises a spreading module (2d, 2d') supplied with products via a flexible pipe and **in that** the spreading module comprises a means (23) for spreading and distribution formed by a jet carried by a rigid supply pipe (24) formed by two pipe segments, upstream (240) and downstream (241), connected together via a swivel joint (242), said jet (23) being connected to the downstream pipe segment (24) via an elastically deformable sleeve (230), a first motor means (231) being installed between the jet (23) and the downstream pipe segment (241) by being kinematically coupled thereto, and a second motor means (243) being coupled respectively to two pipe segments (240, 241) and this being either side of the swivel joint (242).

12. Device according to one of Claim 11, **characterized in that** the jet (23) for spreading and distribution is equipped with a thermal camera (244).

13. Device according to Claim 11 or Claim 12, **characterized in that** the jet (23) receives, at the level of its discharge outlet, an articulated deflector (255) the inclination of which facing the discharge outlet is adjustable by means of a motor means (256) .

14. Device according to Claim 13, **characterized by**:
- infrared type detectors disposed on the flexible pipe for supplying products, said detectors being capable of detecting bodies on fire or with a high temperature transported in said pipe in order to control manoeuvring of the deflector in the direction of closing the jet in the event of detection,
- and/or an acoustic detector installed in the flexible product supply pipe, which is capable of detecting sounds produced by the passage of foreign bodies so that the deflector can be manoeuvred downwards in order to return these bodies to a receptacle carried by the jet below its discharge outlet.

15. Device according to anyone of the claims 11 to 14, **characterized by** a means for removing dust installed between the upstream rigid pipe segment (24) and the flexible product supply pipe.

16. Device according to anyone of the preceding claims, **characterized by** an additional spreading module comprising a dolly for suspension on the guide rail (4) to which is attached, via a rigid pipe, the upper end of a telescopic lance (26) which can be orientated in azimuth and in inclination provided with motor means for retraction and deployment, said lance comprising a distal lance section and a proximal lance section.

17. Device according to anyone of the preceding claims, **characterized in that** it further comprises at least one automotive remote controlled module (6a, 6b, 6c) provided to move over the ground of the rearing premises, said module (6a, 6b, 6c) comprising a chassis mounted on wheels bearing on the ground.

18. Device according to the preceding claim, **characterized in that** one (6a) of the automotive remote controlled modules is provided with gripping claws (60) for collecting dead or injured animals, or is dedicated to collecting eggs and comprises two pick-up arms forming a V in the front zone and a platform for receiving eggs formed between the arms.

19. Device according to Claim 17, **characterized in that** one (6c) of the remote controlled modules is provided with a spreading jet and a reservoir of spreading product provided to be replenished via a product delivering means transported by the monitoring unit (1) and connected to a dedicated supply which is outside the rearing premises via a flexible pipe.

20. Device according to Claim 16, **characterized in that** the lance (26) is connected to a bypass valve (267) controlled by the processing unit (3), wherein one channel is connected to a product dedicated supply and wherein the other channel is connected to a vacuum pump (268) in communication with a gas analyser.

21. Device according to Claim 11, **characterized in that** the spreading jet 23 is vertical.

22. Device according to anyone of the preceding claims, **characterized by** a telescopic pole (9) provided to receive different detachable tools.

23. Device according to anyone of the preceding claims, **characterized in that** it comprises a plurality of functional units which are capable of supplying the intervening modules (2d, 2d', 2e, 2g) with solid, gaseous or liquid products, to analyse in particular the environmental air of the premises and the emanations produced in said premises, and **in that** it comprises a unit (1000) that can deliver supplements to the food ration, a unit (1010) for preparing food rations providing the functions of dosing, cutting, grinding and mixing, a unit (1020) for generating a disinfectant and/or ionising gas, a unit (1030) for generating a liquid disinfectant, a unit (1040) for generating a powdered disinfectant, a unit (1050) for adding solid and liquid additives, a unit (1060) for the preparation of litter, a unit (1070) forming a reservoir for firefighting water, a unit (1080) forming a reservoir of powder or foam for firefighting, a high pressure cleaning unit (1090), a unit (1100) constituted by a station for suction and chemical, physical and biological analysis of the air in the buildings and the emanations therefrom, and a unit (1110) for sending or propelling products delivered by the units (1000, 1010, 1050 and 1060) to one of the active distribution modules (2d, 2d', 2e, 2g).

24. Device according to anyone of the preceding claims, **characterized in that** the monitoring unit (1) is towed by a cable forming an endless belt stretched between a driven pulley and a drive pulley coupled to detachable means for driving in rotation.
